(19) Europäisches Patentamt
European Patent Office
Office européen des brevets

(11) EP 3 109 924 B1

(12) **EUROPEAN PATENT SPECIFICATION**

(45) Date of publication and mention of the grant of the patent:
**03.10.2018 Bulletin 2018/40**

(21) Application number: **16175484.1**

(22) Date of filing: **21.06.2016**

(51) Int Cl.:
***H01M 2/16** (2006.01)*
***H01M 4/134** (2010.01)*
***H01M 4/1395** (2010.01)*
***H01M 10/052** (2010.01)*
***H01M 10/0568** (2010.01)*
***H01M 10/0569** (2010.01)*
*H01M 4/36 (2006.01)*

(54) **NEGATIVE ELECTRODE FOR LITHIUM METAL BATTERY AND LITHIUM METAL BATTERY INCLUDING THE SAME**

NEGATIVE ELEKTRODE FÜR LITHIUM-METALL-BATTERIE UND LITHIUM-METALL-BATTERIE DAMIT

ÉLECTRODE NÉGATIVE POUR BATTERIE AU LITHIUM MÉTAL ET BATTERIE CONTENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2015 KR 20150090495**

(43) Date of publication of application:
**28.12.2016 Bulletin 2016/52**

(73) Proprietor: **Samsung Electronics Co., Ltd.**
**Gyeonggi-do 16677 (KR)**

(72) Inventors:
- **YANG, Yooseong**
  **16678 Gyeonggi-do (KR)**
- **JEONG, Joonseon**
  **16678 Gyeonggi-do (KR)**

(74) Representative: **Mullen, Lee Bryan et al**
**Elkington and Fife LLP**
**Thavies Inn House**
**3-4 Holborn Circus**
**London EC1N 2HA (GB)**

(56) References cited:
**US-A1- 2005 095 504**
**US-A1- 2015 155 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 109 924 B1

## Description

### FIELD OF THE INVENTION

The present disclosure relates to a lithium metal battery comprising a negative electrode.

### BACKGROUND OF THE INVENTION

A lithium secondary battery is a high performance secondary battery having the highest energy density among other currently available secondary batteries, and thus may be used in various practical applications, such as electric vehicles.

A lithium secondary battery may include a lithium metal electrode as a negative electrode. A lithium metal electrode has high electric capacity per unit weight, and thus the battery including the lithium electrode may have high electric capacity. However, when such a lithium electrode is used as a negative electrode, the lithium electrode may react with a liquid electrolyte during charging and discharging processes, and due to the high reactivity of lithium, this reaction may result in dendrite formations on the surface of the lithium electrode. Accordingly, a lithium secondary battery including such a lithium electrode may have reduced cycle characteristics and stability. Therefore, there remains a need for a lithium battery having improved cell performance.

US 2005/095504 discloses a negative electrode for a lithium metal battery and a lithium metal battery comprising the same. The negative electrode comprises a negative active material layer of metallic lithium or a lithium alloy, and a passivation layer formed on the negative active material layer. The passivation layer has a structure comprising a 3-dimensionally cross-linked polymer network matrix penetrated by linear polymers.

US 2015/155541 discloses a method of providing a separator comprising impregnating a laminated porous film, which is formed by laminating a heat-resistant layer containing polyvinyl alcohol (PVA) and an inorganic filler on one side or both sides of a substrate material porous film predominantly composed of polyolefin, with a solution containing a compound having the ability of cross-linking PVA, and then removing a solvent.

### SUMMARY OF THE INVENTION

Provided is a lithium metal battery comprising:

a positive electrode,
a negative electrode,
an electrolyte interposed between the positive electrode and the negative electrode, and
a separator;

wherein the negative electrode comprises:

a lithium metal electrode; and
a protection film disposed on at least a portion of the lithium metal electrode,
wherein the protection film comprises at least one first polymer selected from a polyvinyl alcohol graft copolymer, a crosslinked polyvinyl alcohol graft copolymer, a crosslinked polyvinyl alcohol copolymer, and a blend thereof.

The present disclosure provides a lithium metal battery having improved cell performance by including the negative electrode.

Additional aspects will be set forth in part in the description which follows and, in part, will be apparent from the description, or may be learned by practice of the presented exemplary embodiments.

According to the invention, a lithium metal battery includes:

a positive electrode;
the negative electrode; and
an electrolyte interposed between the positive electrode and the negative electrode, and
a separator;

wherein the negative electrode comprises:

a lithium metal electrode; and
a protection film disposed on at least a portion of the lithium metal electrode, wherein the protection film comprises

at least one first polymer selected from a polyvinyl alcohol graft copolymer, a crosslinked polyvinyl alcohol graft copolymer, a crosslinked polyvinyl alcohol copolymer, and a blend thereof.

A lithium metal battery comprising the negative electrode including a protection film uniformly maintains electric current and ion distribution on the surface of a lithium metal electrode to suppress the growth of dendrites and improve mechanical properties of the lithium metal battery. The protection film may improve cycle characteristics of the lithium metal battery because the protection film has a high degree of adhesiveness to a lithium negative electrode, thereby uniformly maintaining lithium metal deposition during charging of the lithium metal battery and increasing the charge-discharge cycles of the lithium metal battery.

BRIEF DESCRIPTION OF THE DRAWINGS

These and/or other aspects will become apparent and more readily appreciated from the following description of the exemplary embodiments, taken in conjunction with the accompanying drawings in which:

FIGS. 1 and 2 are schematic views illustrating a structure of a lithium metal battery according to exemplary embodiments;
FIG. 3 is a graph of transmittance (arbitrary units, a. u.) versus wavenumber (reverse centimeters, $cm^{-1}$) illustrating an infrared spectrum of a polyvinyl alcohol acrylonitrile graft copolymer (PVA-g-AN copolymer) prepared according to Example 1;
FIG. 4 is a graph of transmittance (arbitrary units, a. u.) versus wavenumber (reverse centimeters, $cm^{-1}$) illustrating an infrared spectrum of an acrylonitrile methyl methacrylate copolymer prepared according to Comparative Example 2;
FIG. 5 is a graph of heat flow (Watts per gram) versus temperature (degrees Centigrade, °C) illustrating an analysis spectrum obtained using a differential scanning calorimeter from a polyvinyl alcohol acrylonitrile graft copolymer prepared according to Example 1;
FIG. 6 is a graph of heat flow (Watts per gram) versus temperature (degrees Centigrade, °C) illustrating an analysis spectrum obtained using a differential scanning calorimeter from an acrylonitrile methyl methacrylate copolymer prepared according to Comparative Example 2;
FIGS. 7 and 8 are graphs of imaginary impedance, Z" (Ohms, $\Omega$) versus real impedance, Z' (Ohms, $\Omega$) illustrating impedance analysis results in symmetric cells manufactured using a negative electrode prepared according to Example 1 and a negative electrode prepared according to Comparative Example 1;
FIG. 9 is a graph of stress (Pascals, Pa) versus strain (percent, %) illustrating a stress-strain curve of a polyvinyl alcohol acrylonitrile graft copolymer (PVA-g-AN) protection film prepared according to Example 1;
FIG. 10 is a graph of stress (Pascals, Pa) versus strain (percent, %) illustrating stress-strain curves of a PVA-g-AN protection film prepared according to Example 1 and a P(AN-co-MMA) protection film prepared according to Comparative Example 2;
FIGS. 11 and 12 are graphs of discharge capacity (milliampere hours per gram) and charge/discharge efficiency (percent, %) versus cycle (number) illustrating discharge capacity variations and charge/discharge efficiencies of lithium metal batteries respectively manufactured according to Example 4 and Comparative Example 3; and
FIGS. 13 and 14 are graphs of discharge capacity (milliampere hours per gram) and charge/discharge efficiency (percent, %) versus cycle (number)illustrating discharge capacity variations and charge/discharge efficiencies of lithium metal batteries respectively manufactured according to Comparative Example 3 and Comparative Example 4.

DETAILED DESCRIPTION OF THE EMBODIMENTS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present disclosure. As used herein, the term "and/or" includes any and all combinations of one or more of the associated listed items. Expressions such as "at least one of," when preceding a list of elements, modify the entire list of elements and do not modify the individual elements of the list.
Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or

nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an," and "the" are intended to include the plural forms as well, unless the context clearly indicates otherwise.

The term "or" means "and/or." As used herein, the terms such as "comprising", "including", "having", or the like are intended to indicate the existence of the features regions, integers, steps, operations, components, and/or elements disclosed in the specification, and are not intended to preclude the possibility that one or more other features or elements may exist or may be added.

It will also be understood that when an element such as a layer, a region or a component is referred to as being "on" another layer or element, it can be directly on the other layer or element, or intervening layers, regions, or components may also be present. In contrast, when an element is referred to as being "directly on" another element, there are no intervening elements present.

In the drawings, the sizes of elements are exaggerated or reduced for ease of description. The size or thickness of each element shown in the drawings are arbitrarily illustrated for better understanding or ease of description, and thus the present disclosure is not limited thereto.

Unless otherwise defined, all terms (including technical and scientific terms) used herein have the same meaning as commonly understood by one of ordinary skill in the art to which this general disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

A C rate means a current which will discharge a battery in one hour, e.g., a C rate for a battery having a discharge capacity of 1.6 ampere-hours would be 1.6 amperes.

"(Meth)acryl" as used herein is inclusive of acrylic, methacrylic, acrylate, and methacrylate. (Meth)acrylate is inclusive of acrylate and methacrylate.

"Polymer" as used herein is inclusive of resins.

Hereinafter, a lithium metal battery including a negative electrode according to an exemplary embodiment will be described more in detail by referring to the appended drawings.

According to the present invention, a lithium metal battery includes:

a positive electrode,
a negative electrode,
an electrolyte interposed between the positive electrode and the negative electrode, and
a separator;

wherein the negative electrode includes:

a lithium metal electrode; and
a protection film disposed on at least a portion of the lithium metal electrode,
wherein the protection film includes at least one first polymer selected from a polyvinyl alcohol graft copolymer, a crosslinked polyvinyl alcohol graft copolymer, a crosslinked polyvinyl alcohol copolymer, and a blend thereof.

The term "polyvinyl alcohol graft copolymer" as used herein refers to a product obtained by graft copolymerizing a polyvinyl alcohol. For example, the product may be a graft copolymer of a polyvinyl alcohol and an olefinic monomer. The olefinic monomer may refer to a compound having an unsaturated bond-containing functional group capable of graft bonding with a polyvinyl alcohol.

Examples of the olefinic monomer may include at least one selected from acrylonitrile, styrene, vinyl acetate, 4-bromostyrene, tert-butylstyrene, divinyl benzene, methyl (meth)acrylate, ethyl (meth)acrylate, propyl (meth)acrylate, n-butyl (meth)acrylate, iso-butyl (meth)acrylate, ethylene, propylene, iso-butylene, N-iso-propyl acrylamide, vinylidene fluoride, 4-methyl pentane-1, maleic anhydride, cyclohexyl (meth)acrylate, cyclohexyl vinyl ether, tert-butyl vinyl ether, vinyl cyclohexane, butenylene terephthalates, ethenylene terephthalate, and vinyl pyridine.

The amount of the olefinic monomer may be in a range of about 50 moles (mol) to about 200 mol, for example, about 50 mol to about 70 mol, based on 100 mol of the polyvinyl alcohol.

The terms "crosslinked polyvinyl alcohol copolymer" and "polyvinyl alcohol crosslinked copolymer" refer to a copolymer obtained by a crosslinking reaction between a polyvinyl alcohol and a crosslinking agent.

Non-limiting examples of the crosslinking agent may include at least one selected from a monoaldehyde, a dialdehyde, an amino-formaldehyde resin, a glyoxalate, an acetal compound, a bivalent metal, a trivalent metal, a tetravalent metal, a metal chelate compound, an oxazoline, a melamine, an epichlorohydrin, an aziridine, and a polyvalent inorganic acid. For example, the crosslinking agent may include: a monoaldehyde such as formaldehyde, acetaldehyde, propionaldehyde, butyraldehyde, etc.; a dialdehyde such as glyoxal, malondialdehyde, succindialdehyde, glutardialdehyde, maleindialdehyde, phthaldialdehyde, etc.; an amino-formaldehyde resin such as methylolurea, methylolmelamine, an alkylated methylolurea, an alkylated methylol melamine, an acetoguanamine, a condensate of benzoguanamine and formaldehyde, etc.; a glyoxalate such as metal glyoxylate (examples of the metal may include: alkali metals such as lithium, sodium, potassium, etc; alkali earth metals such as magnesium, calcium, etc.; transition metals such as titanium, zirconium, chromium, manganese, iron, cobalt, nickel, copper, etc.; and other metals such as zinc; aluminum, etc.), an amine glyoxylate (examples of amine may include ammonia, monomethylamine, dimethylamine, trimethylamine, etc.); etc.; an acetal compound such as dimethoxy ethanal, diethoxy ethanal, dialkoxy ethanal, etc.; a bivalent metal such as magnesium, calcium, aluminum, iron, nickel, etc.; a trivalent metal; a tetravalent metal; a metal chelate compound; an oxazoline; a melamine; an epichlorohydrin; an aziridine; or a polyvalent inorganic acid such as boric acid, phosphoric acid, sulfuric acid, etc. These crosslinking agents may be used alone or as a combination of two or more thereof.

The amount of the crosslinking agent may be in a range of about 50 mol to about 200 mol, for example, about 100 mol to about 150 mol based on 100 mol of polyvinyl alcohol. While not wishing to be bound by theory, it is understood that when the amount of the crosslinking agent is within this range, the protection film may have satisfactory mechanical properties.

The terms "crosslinked polyvinyl alcohol graft copolymer" and "crosslinked copolymer formed from a polyvinyl alcohol graft copolymer" refer to a crosslinked copolymer resulting from a crosslinking reaction of a hydroxy group of polyvinyl alcohol that is not participating in the graft bonding of the polyvinyl alcohol graft copolymer with a crosslinking agent.

The term "a blend thereof" refers to a polyvinyl alcohol graft copolymer blend, a crosslinked copolymer blend formed from a polyvinyl alcohol graft copolymer, a polyvinyl alcohol crosslinked copolymer blend, or a combination thereof.

The protection film may have a tensile modulus of about 10.0 megaPascals (MPa) or greater, for example, about 20 MPa to about 1,000 MPa, or about 100 MPa to about 500 MPa at about 25°C. Further, the protection film may have an elongation of about 50% or greater, for example, about 100% or greater at about 25°C. The protection film may have a peel strength of about 5.0 MPa or greater, for example, about 10.0 MPa or greater at about 25°C.

Although a protection film according to an exemplary embodiment does not contain a lithium salt, the protection film may have a high degree of elongation in a range of about 50% or greater, for example, 100% or greater at about 25°C. As the elongation of the protection film is increased as described above, toughness of the protection film considered together with tensile modulus and elongation, may be remarkably improved.

In some embodiments, the lithium metal electrode may include a lithium metal thin film or a lithium metal alloy thin film. In some embodiments, a liquid electrolyte may be disposed on the lithium metal electrode.

A lithium metal electrode has a high electric capacity per unit weight, a battery with a high capacitance may be obtained by using the lithium metal electrode. However, a lithium metal electrode may cause a short circuit between a positive electrode and a negative electrode due to the formation and growth of dendrite structures during deposition and dissolution of lithium ions. Further, since the lithium metal electrode has a high reactivity with respect to an electrolyte, a side reaction with the electrolyte may take place, and accordingly, cycle lifetime of a battery may be deteriorated. Further, as charging and discharging of a lithium battery are repeated, changes in volume and thickness of the battery may occur, causing dissolution of lithium from the negative electrode. To address this drawback, a protection film capable of protecting the surface of a lithium metal is desired. A protection film used in the lithium metal battery of the invention includes at least one first polymer selected from a polyvinyl alcohol graft copolymer having low production cost, a crosslinked copolymer formed from the polyvinyl alcohol graft copolymer, a polyvinyl alcohol crosslinked copolymer, and a blend thereof. When such a first polymer is formed on at least a portion of the lithium metal electrode, the first polymer may effectively reduce reactivity between a non-polar electrolyte and the lithium metal electrode since the first polymer may be polar due to the inclusion of a polyvinyl alcohol graft copolymer having a hydroxy group. Further, the first polymer may more uniformly maintain electric current and ion distribution on the surface of the lithium metal electrode,

thus suppressing formation or growth of dendrites on the lithium metal surface, thereby stabilizing an interface between the electrolyte and the lithium metal electrode. The first polymer may be polar, and thus, may not be soluble in a carbonate-based organic solvent, an ester-based organic solvent, and an ionic liquid. Therefore, the protection film including the first polymer may have satisfactory chemical resistance against a liquid electrolyte such as a carbonate-based organic solvent, unlike conventional polyethylene oxide-based protection films. Further, the protection film may effectively suppress the generation of a short circuit within a battery caused by cracking in the protection film. A protection film according to any of the above-described embodiments may have a high degree of mechanical strength and may be stable against volume changes during charging and discharging due to the inclusion of a copolymer obtained by crosslinking or graft bonding, or a blend thereof as described above.

A protection film according to any of the above-described embodiments may have satisfactory mechanical properties such as tensile modulus and elongation. Further, hydrogen of a hydroxy group in the first polymer of the protection film may form a hydrogen bond with oxygen of a hydroxy group present on the surface of the lithium metal electrode. As a result, the protection film may have a high degree of binding strength to the lithium metal electrode, so that a reduction in binding strength of the protection film with repeated charging and discharging may be suppressed. While not wishing to be bound by theory, it is understood that when a negative electrode including a protection film according to any of the above-described exemplary embodiments is used, due to strong adhesive force of a polyvinyl alcohol graft copolymer, a crosslinked copolymer formed from the polyvinyl alcohol graft copolymer, a polyvinyl alcohol crosslinked copolymer, or a blend thereof, uniform deposition of lithium metal during charging and discharging of the lithium battery and consequential stabilization of lithium may be achieved and the long-term performance of the lithium battery may be improved. Further, the protection film may be easily coated on a surface of the lithium metal electrode, may have satisfactory film-forming characteristics, may be stable against volume changes during charging and discharging, and may have a high degree of ion conductivity.

The first polymer of the protection film may have a weight average molecular weight of about 30,000 Daltons (Da) or greater, for example, about 50,000 Da to about 200,000 Da, for example, about 80,000 Da to about 100,000 Da. The first polymer may have an average polymerization degree of about 500 to about 3,000, for example about 1,000 to about 2,000. When the first polymer has a weight average molecular weight of about 30,000 Da or greater, the protection film may have satisfactory mechanical properties. While not wishing to be bound by theory, it is understood that when the first polymer has a weight average molecular weight and an average polymerization degree within the above ranges, the protection film may be satisfactory in film formability, tensile modulus, and elongation.

The first polymer may have a degree of saponification of about 85 mole percent (mol%) or greater, for example, about 85 mol% to about 99.9 mol%, for example, about 88 mol% to about 99 mol%. While not wishing to be bound by theory, it is understood that when the first polymer has a degree of saponification within these ranges, film formability of the protection film and surface characteristics between the protection film and the lithium metal electrode may be satisfactory, and tensile modulus and elongation may also be improved. Further, peel strength between the protection film and the lithium metal electrode may be improved compared to conventional protection films.

The first polymer may have a glass transition temperature of about 20°C to about 100°C, for example, about 40°C to about 80°C. While not wishing to be bound by theory, it is understood that when the first polymer has a glass transition temperature within these ranges, the protection film may have satisfactory thermal characteristics. Therefore, a lithium battery of the present invention having satisfactory cycle characteristics may be manufactured according to any of the above-described embodiments.

In some embodiments, a main peak of the protection film according to any of the above-described embodiments at $2\theta$ of about 12.5 degrees to about 27.5 degrees may have a full width at half maximum (FWHM) of about 3 degrees to about 7 degrees, as analyzed by X-ray diffractometry (XRD). While not wishing to be bound by theory, it is understood that when the main peak of the protection film has a FWHM within this range the first polymer of the protection film may have good crystallinity and amorphous characteristics.

The first polymer may be used as a blend with the second polymer. For example a polyvinyl alcohol graft copolymer blend may include a polyvinyl alcohol graft copolymer, and a second polymer having a high degree of miscibility with the polyvinyl alcohol graft copolymer and a small solubility with respect to a carbonate-based organic solvent. Further, a polyvinyl alcohol crosslinked copolymer blend may include a polyvinyl alcohol crosslinked copolymer and a second polymer having a high degree of miscibility with the polyvinyl alcohol crosslinked copolymer and a small solubility with respect to a carbonate-based organic solvent. A crosslinked copolymer blend formed from the polyvinyl alcohol graft copolymer may include a crosslinked copolymer formed from the polyvinyl alcohol graft copolymer and a second polymer having a high degree of miscibility with the crosslinked copolymer formed from the polyvinyl alcohol graft copolymer and a small solubility with respect to a carbonate-based organic solvent. In another embodiment, a first polymer blend comprising two or more of polyvinyl alcohol graft copolymer, a polyvinyl alcohol crosslinked copolymer, and a crosslinked copolymer formed from the polyvinyl alcohol graft copolymer, with the second polymer can be used, wherein the combination of the first polymer blend and the second polymer is itself a blend.

For example, the second polymer may include at least one selected from a (meth)acryl polymer and a polyacrylonitrile. Examples of the second polymer may include at least one selected from polymethyl methacrylate, polymethyl acrylate, polyethyl methacrylate, polyethyl acrylate, polypropyl methacrylate, polypropyl acrylate, polybutyl acrylate, polybutyl methacrylate, polypentyl methacrylate, polypentyl acrylate, polycyclohexyl methacrylate, polycyclohexyl acrylate, polyhexyl methacrylate, polyhexyl acrylate, polyglycidyl acrylate, polyglycidyl methacrylate, and polyacrylonitrile.

The amount of the second polymer may be in a range of about 0.1 parts by weight to about 100 parts by weight, for example, about 10 parts by weight to about 50 parts by weight, based on 100 parts by weight of at least one first polymer elected from a polyvinyl alcohol graft copolymer, a crosslinked copolymer formed from the polyvinyl alcohol graft copolymer, a polyvinyl alcohol crosslinked copolymer, and a blend thereof.

In some embodiments, the protective film of the lithium metal battery may additionally include a lithium salt. The amount of the lithium salt may be in a range of about 30 parts by weight to about 200 parts by weight, for example, about 50 parts by weight to about 150 parts by weight, based on 100 parts by weight of the first polymer. For example, a mixing molar ratio of a hydroxy group of the first polymer of the protection film to lithium may be controlled to be in a range of from about 2:1 to about 20:1, for example, about 2.6:1 to about 6:1. When the amount of the lithium salt and the mixing molar ratio of the hydroxy group to lithium are within these ranges, the protection film may have a high degree of ion conductivity and mechanical properties to effectively suppress the growth of lithium dendrites on the surface of the negative electrode. As a result of the suppression in growth of dendrites, deterioration in lifetime and safety of a lithium metal battery may be prevented.

Examples of the lithium salt may include LiSCN, $LiN(CN)_2$, $LiClO_4$, $LiBF_4$, $LiAsF_6$, $LiPF_6$, $LiCF_3SO_3$, $Li(FSO_2)_2N$, $Li(CF_3SO_2)_3C$, $LiN(SO_2C_2F_5)_2$, $LiN(SO_2CF_3)_2$, $LiSbF_6$, $LiPF_3(CF_2CF_3)_3$, $LiPF_3(CF_3)_3$, $LiB(C_2O_4)_2$, LiCl, LiI, and a combination thereof.

The presence of the first polymer, such as a polyvinyl alcohol graft copolymer, a crosslinked copolymer formed from the polyvinyl alcohol graft copolymer, and a polyvinyl alcohol crosslinked copolymer, and the second polymer in the protection film may be identified by i) a surface analysis method such as X-ray photoelectron spectroscopy (XPS) and Fourier transform infrared spectroscopy (FT-IR) and ii) a chemical analysis method such as nuclear magnetic resonance (NMR) and differential scanning calorimetry (DSC).

In some embodiments, the protection film may have an elongation of about 50% or greater, for example, about 100% or greater, for example, about 150% or greater, for example, about 200% to about 300% at about 25°C. A protection film according to an embodiment further including a lithium salt may have an elongation of about 50% or greater, for example, about 100% or greater, for example, about 150% or greater, for example, about 700% to about 1,000% at about 25°C. When the protection film has an elongation within these ranges, the protection film may have good ductility to have good durability against volume changes of lithium metal during charging and discharging of a lithium metal battery, and thus may suppress formation of lithium dendrites.

According to an exemplary embodiment, the protection film may include a polyvinyl alcohol graft copolymer and an acrylonitrile graft copolymer.

According to another exemplary embodiment, an interfacial resistance (Ri) between the electrolyte and the lithium metal derived from a Nyquist plot obtained by impedance measurement may be reduced by about 10% at about 25°C compared to when a bare lithium metal is used.

The protection film may have a thickness of about 1 micrometer ($\mu$m) to about 20 $\mu$m, for example, about 1 $\mu$m to about 5 $\mu$m. When the protection film has a thickness within these ranges, the protection film may have a low interfacial resistance while maintaining satisfactory mechanical properties.

The protection film may further include at least one selected from inorganic particles and an oligomer. The inorganic particle may include a metal hydroxide, a metal carbonate, a metal carboxylate, a metal silicate, a metal aluminosilicate, a metal carbide, a metal nitride, a metal halide, a metal nitrate, a carbon oxide, a carbonaceous material, an organic-inorganic composite, or a combination thereof. Examples of the inorganic particles may include at least one selected from $SiO_2$, $TiO_2$, ZnO, $Al_2O_3$, $BaTiO_3$, graphene oxide, graphite oxide, a carbon nanotube, $Fe_2O_3$, CuO, a cage-structured silsesquioxane, and a metal-organic framework (MOF).

For example, the cage-structured silsesquioxane may be a polyhedral oligomeric silsesquioxane (POSS). For example, the POSS may include about 8 or less silicon atoms, for example, about 6 or eight silicon atoms. The cage-structured silsesquioxane may be a compound represented by the following Formula 1:

Formula 1 $$Si_kO_{1.5k}(R_1)_a(R_2)_b(R_3)_c$$

In formula 1, $R_1$ to $R_3$ may be each independently a hydrogen, a substituted or unsubstituted $C_1$-$C_{30}$ alkyl group, a substituted or unsubstituted $C_1$-$C_{30}$ alkoxy group, a substituted or unsubstituted $C_2$-$C_{30}$ alkenyl group, a substituted or unsubstituted $C_2$-$C_{30}$ alkynyl group, a substituted or unsubstituted $C_6$-$C_{30}$ aryl group, a substituted or unsubstituted $C_6$-$C_{30}$ aryloxy group, a substituted or unsubstituted $C_2$-$C_{30}$ heteroaryl group, a substituted or unsubstituted $C_4$-$C_{30}$ carbocyclic group, or a silicon-containing functional group.

In Formula 1, $0<a<20$, $0<b<20$, $0<c<20$, and, a, b, and c are selected so that $k=a+b+c$, and $6\leq k\leq 20$.

The cage-structured silsesquioxane may be a compound represented by the following Formula 2 or a compound represented by the following Formula 3:

Formula 2

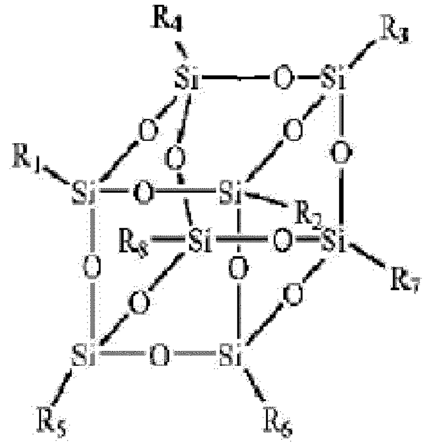

In formula 2, $R_1$ to $R_8$ may be each independently a hydrogen, a substituted or unsubstituted $C_1$-$C_{30}$ alkyl group, a substituted or unsubstituted $C_1$-$C_{30}$ alkoxy group, a substituted or unsubstituted $C_2$-$C_{30}$ alkenyl group, a substituted or unsubstituted $C_2$-$C_{30}$ alkynyl group, a substituted or unsubstituted $C_6$-$C_{30}$ aryl group, a substituted or unsubstituted $C_6$-$C_{30}$ aryloxy group, a substituted or unsubstituted $C_2$-$C_{30}$ heteroaryl group, a substituted or unsubstituted $C_4$-$C_{30}$ carbocyclic group, or a silicon-containing functional group.

Formula 3

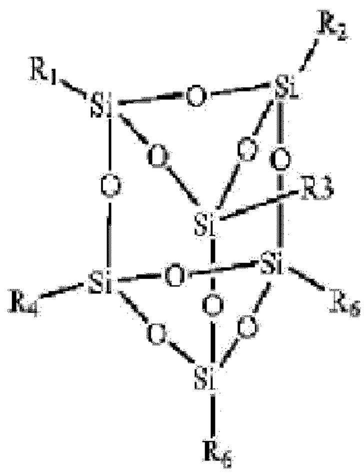

In formula 3, $R_1$ to $R_6$ may be each independently a hydrogen, a substituted or unsubstituted $C_1$-$C_{30}$ alkyl group, a substituted or unsubstituted $C_1$-$C_{30}$ alkoxy group, a substituted or unsubstituted $C_2$-$C_{30}$ alkenyl group, a substituted or unsubstituted $C_2$-$C_{30}$ alkynyl group, a substituted or unsubstituted $C_6$-$C_{30}$ aryl group, a substituted or unsubstituted $C_6$-$C_{30}$ aryloxy group, a substituted or unsubstituted $C_2$-$C_{30}$ heteroaryl group, a substituted or unsubstituted $C_4$-$C_{30}$ carbocyclic group, or a silicon-containing functional group.

According to an exemplary embodiment, $R_1$ to $R_8$ in the cage-structured silsesquioxane may be octaiso-butyl groups. For example, in the cage-structured silsesquioxane may be octaiso-butyl-t8-silsesquioxane.

The inorganic particles may have various shapes. For example, the inorganic particle may have a spherical shape, an elliptical shape, a cubical shape, a tetrahedral shape, a pyramidal shape, an octahedral shape, a cylindrical shape, a polygonal pillar-like shape, a conical shape, a columnar shape, a tubular shape, a helical shape, a funnel shape, a dendritic shape, or any of various common regular and irregular shapes.

The inorganic particles may be present in an amount of about 10 parts by weight to about 200 parts by weight, e.g., about 50 parts by weight to about 100 parts by weight based on about 100 parts by weight of the first polymer.

While not wishing to be bound by theory, it is understood that when the inorganic particles are contained in the above amount ranges, the protection film may have satisfactory mechanical properties, and the formation of dendrites on the surface of a lithium metal electrode may be effectively suppressed.

The MOF may be a porous crystalline compound formed by chemically binding of an organic ligand with a Group 2 to Group 15 element ion or a cluster of Group 2 to Group 15 element ions.

The organic ligand refers to an organic group capable of performing chemical bonding such as coordinated bonding, ionic bonding, or covalent bonding. For example, an organic group having two or more sites capable of bonding to the above-described element ions may form a stable structure by bonding to the element ions.

The Group 2 to Group 15 element ion may be at least one selected from cobalt (Co), nickel (Ni), molybdenum (Mo), tungsten (W), ruthenium (Ru), osmium (Os), cadmium (Cd), beryllium (Be), calcium (Ca), barium (Ba), strontium (Sr), iron (Fe), manganese (Mn), chromium (Cr), vanadium (V), aluminum (Al), titanium (Ti), zirconium (Zr), copper (Cu), zinc (Zn), magnesium (Mg), hafnium (Hf), niobium (Nb), tantalum (Ta), rhenium (Re), rhodium (Rh), iridium (Ir), palladium (Pd), platinum (Pt), silver (Ag), scandium (Sc), yttrium (Y), indium (In), thallium (Tl), silicon (Si), germanium (Ge), tin (Sn), lead (Pb), arsenic (As), antimony (Sb), and bismuth (Bi). The organic ligand may be a group derived from at least one selected from an aromatic dicarboxylic acid, an aromatic tricarboxylic acid, an imidazole compound, a tetrazole compound, a 1,2,3-triazole compound, a 1,2,4-triazole compound, a pyrazole compound, an aromatic sulfonic acid, an aromatic phosphoric acid, an aromatic sulfinic acid, an aromatic phosphinic acid, a bipyridine, and compounds having at least one functional group selected from an amino group, an imino group, an amide group, dithiocarboxylic acid group ($-CS_2H$), a dithiocarboxylic acid anion group ($-CS_2^-$), a pyridine group, and a pyrazine group.

The above-described aromatic dicarboxylic acid or aromatic tricarboxylic acid may include a benzene dicarboxylic acid, a benzene tricarboxylic acid, a biphenyl dicarboxylic acid, a terphenyl dicarboxylic acid, etc.

For example, the organic ligand may be may be a group derived from any one of a compound represented by Formula 4:

Formula 4

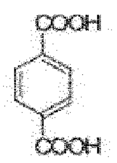 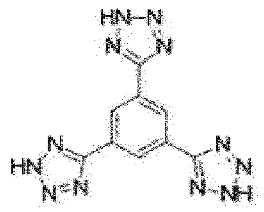 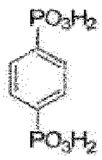 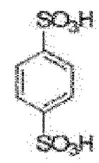

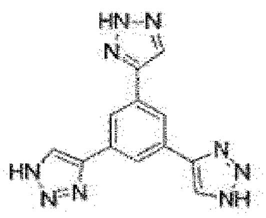 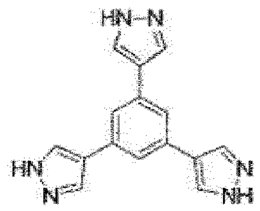 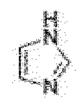 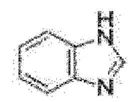

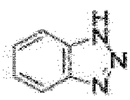 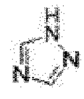

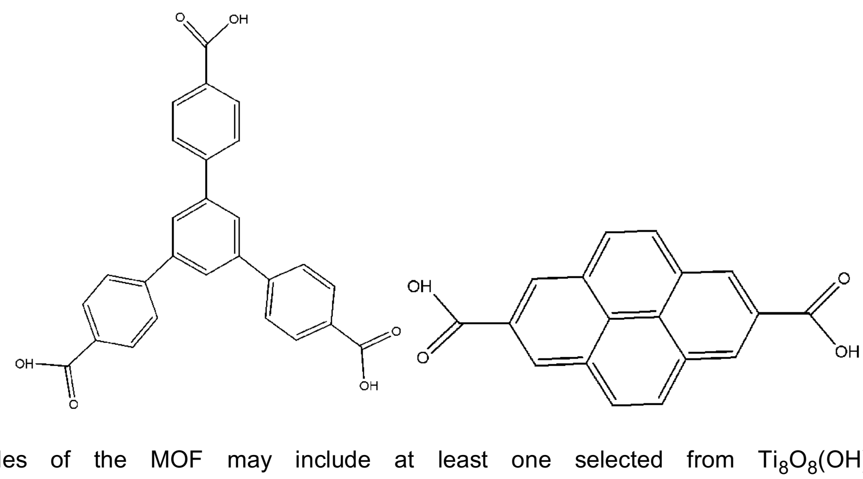

Examples of the MOF may include at least one selected from $Ti_8O_8(OH)_4[O_2C-C_6H_4-CO_2]_6$,

$Cu(bpy)(H_2O)_2(BF_4)_2(bpy)$\{bpy=4,4'-bipyridine\}, $Zn_4O(O_2C\text{-}C_6H_4\text{-}CO_2)_3$(Zn-terephthalic acid-MOF, Zn-MOF), and $Al(OH)\{O_2C\text{-}C_6H_4\text{-}CO_2\}$.

In some embodiments, the protection film may further include a plurality of inorganic particles. When the protection film further includes inorganic particles, mechanical properties of the protection film may be improved. The inorganic particles may have an average particle diameter of about 100 nanometers (nm) or less, for example, about 1 nm to about 100 nm, for example, about 5 nm to about 70 nm. For example, the inorganic particles may have a particle diameter of about 30 nm to about 70 nm. While not wishing to be bound by theory, it is understood that when the inorganic particles have a particle diameter within these ranges, the protection film may have satisfactory film formability and satisfactory mechanical properties.

In some embodiments, the protection film may further include an electrolyte. The electrolyte may further include at least one selected from a liquid electrolyte, a polymer electrolyte, a gel electrolyte, an ionic liquid, and a polymeric ionic liquid.

The ionic liquid refers to a salt or a room temperature-molten salt which has a melting point of room temperature or lower, includes ions only, and is present in a liquid state at room temperature. Examples of the ionic liquid may include at least one selected from compounds each including i) at least one cation selected from an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, and a triazolium cation; and ii) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N$-, and $(CF_3SO_2)_2N^-$.

The ionic liquid may have a cation represented by the following Formula 5:

Formula 5

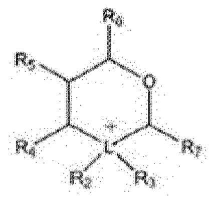
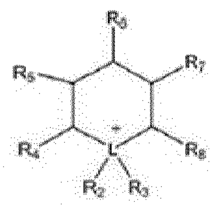
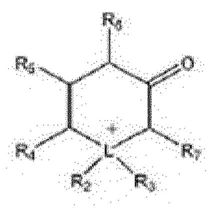
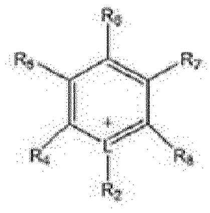
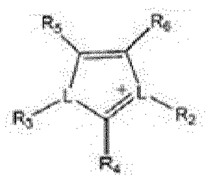
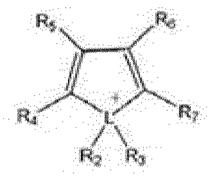
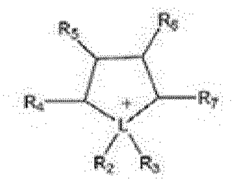

In Formula 5,

L represents N or P, and

$R_2$ to $R_8$ may be each independently a hydrogen, an unsubstituted or substituted $C_1$-$C_{30}$ alkyl group, an unsubstituted or substituted $C_1$-$C_{30}$ alkoxy group, an unsubstituted or substituted $C_6$-$C_{30}$ aryl group, an unsubstituted or substituted $C_6$-$C_{30}$ aryloxy group, an unsubstituted or substituted $C_3$-$C_{30}$ heteroaryl group, an unsubstituted or substituted $C_3$-$C_{30}$ heteroaryloxy group, an unsubstituted or substituted $C_4$-$C_{30}$ cycloalkyl group, or an unsubstituted or substituted $C_3$-$C_{30}$ heterocycloalkyl group.

The amount of the ionic liquid in the protective layer may be in a range of about 5 parts by weight to about 40 parts by weight, e.g., about 10 parts by weight to about 20 parts by weight based on about 100 parts by weight of the first polymer. While not wishing to be bound by theory, it is understood that when the ionic liquid is contained in the above amount ranges, a protection film having satisfactory mechanical properties may be obtained.

Examples of the ionic liquid may include at least one selected from N-methyl-N-propylpyrrolidinium bis(trifluoromethanesulfonyl)imide, N-butyl-N-methylpyrrolidinium bis(3-trifluoromethylsulfonyl)imide, 1-butyl-3-methylimidazolium bis(trifluoromethylsulfonyl)imide, and 1-ethyl-3-methylimidazolium bis(trifluoromethylsulfonyl)imide.

When the protection film contains an ionic liquid and a lithium salt, a molar ratio (IL/Li) of ionic liquid (IL) to lithium ion (Li) in the protection film may be about 0.1 to about 2.0, e.g., about 0.2 to about 1.8, for example, about 0.4

to about 1.5. Since a protection film having such molar ratios has not only satisfactory lithium ionic mobility and ion conductivity, but also satisfactory mechanical properties, the growth of lithium dendrites on the surface of a negative electrode may be effectively suppressed.

Examples of the polymeric ionic liquid may include compounds obtained by polymerizing ionic liquid monomers, and polymer compounds. Such a polymeric ionic liquid has a high solubility in an organic solvent, so the polymeric ionic liquid may be added to an electrolyte to further improve ion conductivity. When the polymeric ionic liquid is prepared by polymerizing ionic liquid monomers as described above, the resulting product from the polymerization may be subjected to cleaning, drying, and then anionic substitution reaction to obtain a polymeric ionic liquid having appropriate anions that provide solubility in an organic solvent. The ionic liquid monomer may have at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, and a triazolium-based cation; and at least one anion as listed above, along with a functional group polymerizable with, for example, a vinyl group, an allyl group, an acrylate group, a methacrylate group, or the like.

Examples of the ionic liquid monomers may include 1-vinyl-3-ethylimidazolium bromide, and compounds represented by the following Formula 6 or 7:

Formula 6

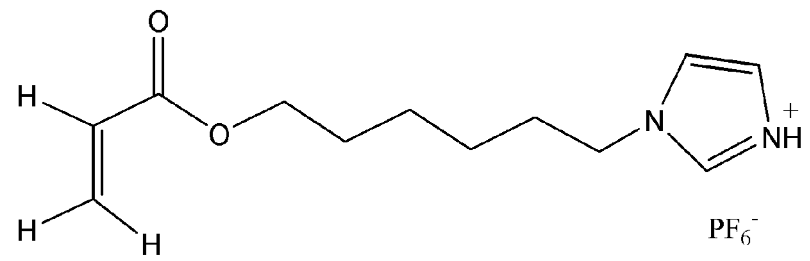

Formula 7

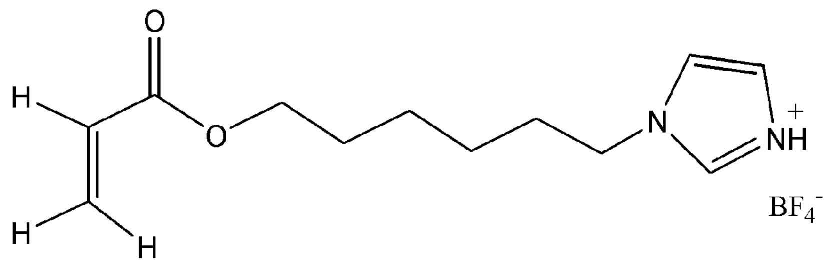

In some embodiments, the polymeric ionic liquid may include a repeating unit including: i) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, and a triazolium-based cation; and ii) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N$-, $Cl^-$, $Br^-$, $I^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, and $(O(CF_3)_2C_2(CF_3)_2O)_2PO^-$.

Examples of the polymeric ionic liquid may include a compound represented by the following Formula 8 or a compound represented by the following Formula 9:

Formula 8

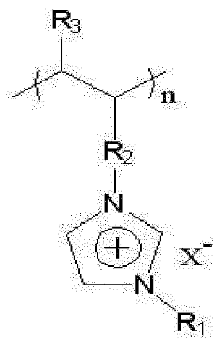

In Formula 8, $R_1$ and $R_3$ may be each independently a hydrogen, a substituted or unsubstituted $C_1$-$C_{30}$ alkyl group, a substituted or unsubstituted $C_2$-$C_{30}$ alkenyl group, a substituted or unsubstituted $C_2$-$C_{30}$ alkynyl group, a substituted or unsubstituted $C_6$-$C_{30}$ aryl group, a substituted or unsubstituted $C_2$-$C_{30}$ heteroaryl group, or a substituted or unsubstituted $C_4$-$C_{30}$ carbocyclic group.

In Formula 8,

$R_2$ simply represents a chemical bond, or represents a $C_1$-$C_3$ alkylene group, a $C_6$-$C_{30}$ arylene group, a $C_2$-$C_{30}$ heteroarylene group, or a $C_4$-$C_{30}$ divalent carbocyclic group,

$X^-$ represents an anion of the ionic liquid, and

n is from about 500 to about 2,800.

Formula 9

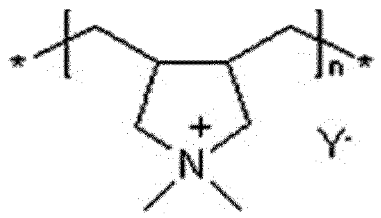

In Formula 9, $Y^-$ is defined in the same manner as $X^-$ of Formula 10, and n is from about 500 to about 2,800.

In Formula 9, $Y^-$ may be, for example, bis(trifluoromethanesulfonyl)imide (TFSI), $BF_4$, or $CF_3SO_3$. For example, the polymeric ionic liquid may include a cation selected from poly(1-vinyl-3-alkylimidazolium) cation, poly(1-allyl-3-alkylimidazolium) cation, and poly(1-methacryloyloxy-3-alkylimidazolium) cation, and an anion selected from $CH_3COO^-$, $CF_3COO^-$, $CH_3SO_3^-$, $CF_3SO_3^-$, $(CF_3SO_2)_2N^-$, $(CF_3SO_2)_3C^-$, $(CF_3CF_2SO_2)_2N^-$, $C_4F_9SO_3^-$, $C_3F_7COO^-$, and $(CF_3SO_2)(CF_3CO)N^-$.

Examples of the compounds represented by Formula 9 may include polydiallyldimethylammonium bis(trifluoromethanesulfonyl)imide.

According to another exemplary embodiment, the polymeric ionic liquid may include a low molecular weight polymer, a thermally stable ionic liquid, and a lithium salt. The low molecular weight polymer may have an ethylene oxide chain. The low molecular weight polymer may be a glyme. For example, the glyme may be polyethylene glycol dimethyl ether (polyglyme), tetraethylene glycol dimethyl ether (tetraglyme), triethylene glycol dimethyl ether (triglyme), or a combination thereof.

The low molecular weight polymer may have a weight average molecular weight of about 75 to about 2,000, e.g., about 250 to about 500. Further, the thermally stable ionic liquid may be the same as defined in the above-described ionic liquid. The lithium salt may be the same as described above.

For example, the oligomer contained in the protection film as an oligomer including an ethylene oxide having lithium ion conductivity may have a weight average molecular weight of about 200 Da to about 2,000 Da, for example, about 100 Da to about 1,000 Da. For example, the oligomer may include at least one selected from polyethylene glycol dimethyl ether and polyethylene glycol diethyl ether.

The amount of the oligomer may be in a range of about 5 parts by weight to about 50 parts by weight, e.g., about 10 parts by weight to about 30 parts by weight based on about 100 parts by weight of the first polymer. While not wishing to be bound by theory, it is understood that when the oligomer is added in such amount ranges, the protection film may have satisfactory film formability, mechanical properties, and ion conductivity characteristics.

The protection film according to any of the above-described embodiments may protect a lithium metal electrode in a lithium metal battery, such as a lithium ion battery and a lithium polymer battery.

For example, the protection film may be useful as a protection film for a high-voltage lithium metal battery operating at a high voltage of about 4.0 V or greater, for example, about 4.0 V to about 5.5 V, for example, about 4.5 V to about 5.0 V.

According to the present invention, a lithium metal battery includes a positive electrode, the above-described negative electrode, and an electrolyte interposed between the positive electrode and the negative electrode, and a separator.

The electrolyte may include at least one selected from a solid electrolyte, a gel electrolyte, and a polymeric ionic liquid.

In some embodiments, the lithium metal battery may additionally include at least one selected from a liquid electrolyte, a solid electrolyte, a gel electrolyte, and a polymeric ionic liquid, and a separator.

In some embodiments, the lithium metal battery may include at least one selected from ethylene carbonate, propylene carbonate, dimethyl carbonate, diethyl carbonate, ethyl methyl carbonate, fluoroethylene carbonate, γ-butyrolactone, dimethoxy ethane, diepoxy ethane, diethylene glycol dimethylether, dipropylene glycol dimethyl ether, trimethylene glycol dimethyl ether, triethylene glycol dimethyl ether, tetraethylene glycol dimethyl ether, polyethylene glycol dimethyl ether, succinonitrile, sulfolane, dimethyl sulfone, ethyl methyl sulfone, diethyl sulfone, adiponitrile, tetrahydrofuran, N-methylpyrrolidone, acetonitrile, benzonitrile, 2-methyltetrahydrofuran, dioxolane, 4-methyldioxolane, N,N-dimethylformamide, N,N-dimethylacetamide, dimethylsulfoxide, dioxane, 1,2-dimethoxyethane, dichloroethane, chlorobenzene, nitrobenzene, diethylene glycol, dimethyl ether, and 1,1,2,2-tetrafluoroethyl 2,2,3,3-tetrafluoropropyl ether.

In some embodiments, the lithium metal battery may have a structure in which: i) a lithium metal electrode, ii) a protection film including at least one first polymer selected from a polyvinyl alcohol graft copolymer, a crosslinked copolymer formed from the polyvinyl alcohol graft copolymer, a polyvinyl alcohol crosslinked copolymer, and a blend thereof, iii) a separator and a liquid electrolyte, and iv) a positive electrode are sequentially laminated.

The liquid electrolyte may additionally include at least one selected from an organic solvent, an ionic liquid, and a lithium salt.

The organic solvent may be any compound generally used in lithium battery. Non-limiting examples of the organic solvent may include a carbonate-based compound, a glyme-based compound, a dioxolane-based compound, etc.

Examples of the carbonate-based compound may include at least one of ethylene carbonate, propylene carbonate, dimethyl carbonate, fluoroethylene carbonate, diethyl carbonate, and ethyl methyl carbonate. Examples of the glyme-based compound may include at least one selected from poly(ethylene glycol) dimethyl ether (PEGDME, polyglyme), tetra(ethylene glycol) dimethyl ether (TEGDME, tetraglyme), tri(ethylene glycol) dimethyl ether (triglyme), poly(ethylene glycol) dilaurate (PEGDL), poly(ethylene glycol) monoacrylate (PEGMA), and poly(ethylene glycol) diacrylate (PEGDA).

Examples of the dioxolane-based compound may include at least one selected from 1,3-dioxolane, 4,5-diethyl-1,3-dioxolane, 4,5-dimethyl-1,3-dioxolane, 4-methyl-1,3-dioxolane, and 4-ethyl-1,3-dioxolane.

Examples of the organic solvent may include 2,2-dimethoxy-2-phenylacetophenone, dimethoxyethane, diethoxyethane, tetrahydrofuran, γ-butyrolactone, etc.

In order to improve charge/discharge characteristics, flame-retardancy, etc., examples of the liquid electrolyte may include pyridine, triethyl phosphite, triethanol amine, cyclic ether, ethylene diamine, n-glyme, hexamethyl phosphoramide, a nitrobenzene derivative, sulfur, a quinine-imine dye, an N-substituted oxazolidinone, an N,N-substituted imidazolidine, an ethylene glycol dialkyl ether, an ammonium salt, pyrrole, 2-methoxy ethanol, aluminum trichloride, etc. In some cases, examples of the liquid electrolyte may additionally include halogen-containing solvents such as carbon tetrachloride, ethylene trifluoride, etc. in order to impart non-combustibility to the liquid electrolyte.

The gel electrolyte may be any electrolytes in gel form known in the art.

For example, the gel electrolyte may contain a polymer and a polymeric ionic liquid.

For example, the polymer may be a solid graft (block) copolymer electrolyte.

The solid electrolyte may be an organic solid electrolyte or an inorganic solid electrolyte.

Examples of the organic solid electrolyte may include a polyethylene derivative, a polyethylene oxide derivative, a polypropylene oxide derivative, a phosphoric acid ester polymer, a poly(L-lysine), polyvinyl alcohol, polyvinyl fluoride, a polymer including ionic dissociable groups, etc.

Examples of the inorganic solid electrolyte may include $Cu_3N$, $Li_3N$, LiPON, $Li_3PO_4Li_2SSiS_2$, $Li_2SGeS_2Ga_2S_3$, $(Na, Li)_{1+x}Ti_{2-x}Al_x(PO_4)_3$ (wherein $0.1 \le x \le 0.9$), $Li_{1+x}Hf_{2-x}Al_x(PO_4)_3$ (wherein $0.1 \le x \le 0.9$), $Na_3Zr_2Si_2PO_{12}$, $Li_3Zr_2Si_2PO_{12}$, $Na_5ZrP_3O_{12}$, $Na_5TiP_3O_{12}$, $Na_3Fe_2P_3O_{12}$, $Na_4NbP_3O_{12}$, $Li_{0.3}La_{0.5}TiO_3$, $Na_5MSi_4O_{12}$ (wherein in M is a rare earth element such as Nd, Gd, Dy, or the like), $Li_5ZrP_3O_{12}$, $Li_5TiP_3O_{12}$, $Li_3Fe_2P_3O_{12}$, $Li_4NbP_3O_{12}$, $Li_{1+x}(M,Al,Ga)_x(Ge_{1-y}Ti_y)_{2-x}(PO_4)_3$ (wherein $0 \le x \le 0.8$, $0 \le y \le 1.0$, and M is Nd, Sm, Eu, Gd, Tb, Dy, Ho, Er, Tm, or Yb), $Li_{1+x+y}Q_xTi_{2-x}Si_yP_{3-y}O_{12}$ (wherein $0 < x \le 0.4$, $0 < y \le 0.6$, and Q is Al or Ga), $Li_6BaLa_2Ta_2O_{12}$, $Li_7La_3Zr_2O_{12}$, $Li_5La_3Nb_2O_{12}$, $Li_5La_3M_2O_{12}$ (wherein M is Nb or Ta), $Li_{7+x}A_xLa_{3-x}Zr_2O_{12}$ (wherein $0 < x < 3$ and A is Zn), etc.

Hereinafter, a method of preparing a negative electrode for a lithium metal battery is disclosed.

First, at least one first polymer selected from a polyvinyl alcohol graft copolymer, a crosslinked copolymer formed from the polyvinyl alcohol graft copolymer, a polyvinyl alcohol crosslinked copolymer, and a blend thereof may be mixed with an organic solvent to obtain a protection film forming composition.

Examples of the organic solvent may include tetrahydrofuran, N-methylpyrrolidone, acetonitrile, benzonitrile, 2-methyltetrahydrofuran, γ-butyrolactone, dioxolane, 4-methyldioxolane, N,N-dimethylformamide, N,N-dimethylacetamide, dimethylsulfoxide, dioxane, 1,2-dimethoxyethane, sulfolane, dichloroethane, chlorobenzene, nitrobenzene, diethylene glycol, dimethyl ether, and a combination thereof. The organic solvent may be contained in an amount range of about 100 parts by weight to about 10,000 parts by weight, for example, about 1,000 parts by weight to about 5,000 parts by weight based on about 100 parts by weight of the first polymer.

For example, the mixing process may be conducted at about 25°C to about 100°C, e.g., about 70°C to about 90°C.

The protection film forming composition may additionally include at least one selected from a plurality of inorganic particles, an oligomer, and an electrolyte. When a film-type protection film is formed using the protection film forming composition, a negative electrode may be prepared by coating the protection film forming composition on a lithium metal electrode and drying the protection film forming composition coated on the lithium metal electrode, thereby forming the protection film. The drying process may be performed in a temperature range of about 60°C or lower, e.g., about 40°C or lower, e.g., about 25°C to about 40°C. When the drying process is performed within these temperature ranges, deformation of the lithium metal electrode may be prevented, and the protection film may have satisfactory mechanical properties.

Although it is possible to form the protection film by directly coating the protection film forming composition on the lithium metal electrode and drying the protection film forming composition coated on the lithium metal electrode, it is also possible to obtain and use the protection film by coating the protection film forming composition on a separate substrate and drying the protection film forming composition coated on the separate substrate.

After the drying process at a temperature within the above-described ranges, vacuum drying in a temperature range of about 60°C or lower, e.g., about 40°C or lower may be further performed. For example, the temperature range may be about 25°C to about 40°C. When such a vacuum drying process is further performed, the amount of an organic solvent remaining in the protection film may be controlled to be in a desired range.

According to an exemplary embodiment, the amount of the organic solvent remaining in the protection film may be in a range of about 10% by weight or lower, e.g., about 0.01% by weight to about 10% by weight based on the total weight of the protection film.

Non-limiting examples of the organic solvent may include dimethyl sulfoxide (DMSO). When the organic solvent is contained in the protection film within the above-described amount ranges, a lithium salt may be uniformly distributed in the protection film so that the protection film may have satisfactory mechanical properties and ion conductivity may be exhibited. The amount of the organic solvent such as DMSO contained in the protection film may be confirmed by thermogravimetric analysis.

A method of coating the protection film forming composition may be any method that is commonly used to form protection films. Examples of the method of coating the protection film forming composition may include spin coating, roll coating, curtain coating, extrusion, casting, screen printing, inkjet printing, doctor blade coating, etc.

The protection film may be electrochemically stable in a voltage range of about 0 V to about 5.5 V (with respect to lithium), e.g., about 0 V to about 5.0 V, for example, about 0 V to about 4.0 V. In some embodiments, the protection film may have an electrochemically stable wide voltage window, and thus may be applicable in an electrochemical device operating at a high voltage.

In some embodiments, a current density of the protection film that results from the side reactions, not from intercalation/deintercalation of lithium, at a voltage of 0 V with respect to lithium may be about 0.05 milliamperes per square centimeter ($mA/cm^2$) or lower, for example, about 0.02 $mA/cm^2$ or lower, for example, about 0.01 $mA/cm^2$ or lower.

In some embodiments, a current density of the protection film that results from oxidation reaction at a voltage of about 5.0 V with respect to lithium may be about 0.05 $mA/cm^2$ or lower, for example, about 0.04 $mA/cm^2$ or lower, for example, about 0.02 $mA/cm^2$ or lower.

A negative electrode for a lithium metal battery may be used at a high voltage of, for example, about 4.0 V or greater, for example, about 4.0 V to about 5.5 V.

Types of the lithium metal battery are not particularly limited, and may include a lithium ion battery, a lithium ion polymer battery, or a lithium sulfur battery, and a lithium primary battery. A lithium metal battery is satisfactory in voltage, capacity, and energy density characteristics, and thus may be widely used in the fields of, for example, mobile phones, laptop computers, storage batteries for power generating units using wind power or sunlight, electric vehicles, uninterruptible power supplies (UPS), household storage batteries, and the like.

FIGS. 1 and 2 are schematic views illustrating structures of a lithium metal battery including a negative electrode according to an exemplary embodiment.

Referring to FIG. 1, a lithium metal battery according to an embodiment may have a structure including a protection film 13 according to an embodiment as described above interposed between a positive electrode 11 and a negative electrode 12. A liquid electrolyte 14a may be disposed between the protection film 13 and the positive electrode 11. The liquid electrolyte 14a may have a composition that may be the same as or different from that of a liquid electrolyte in the protection film 13.

Since the protection film 13 is disposed on the surface of the negative electrode 12, the surface of the negative electrode 12 may be electrochemically stabilized, and consequentially, the surface of the negative electrode 12 may also become mechanically stable. Therefore, the formation of dendrites on the surface of the negative electrode 12 during charging and discharging of the lithium metal battery may be suppressed. An interfacial resistance increase between the negative electrode 12 and the electrolyte with time may also be reduced, thereby improving interfacial stability between the negative electrode 12 and the electrolyte. Accordingly, cycle characteristics of the lithium metal battery may be improved.

The protection film 13 may cover the entire surface of the negative electrode 12, thereby protecting the surface of the negative electrode 12. For example, the protection film 13 may prevent a direct contact between the surface of the negative electrode 12 and the liquid electrolyte 14a having a high reactivity to the surface of the negative electrode 12. Accordingly, the protection film 13 may increase stability of the negative electrode 12 by protecting the negative electrode 12.

Referring to FIG. 2, a lithium metal battery according to another embodiment may have a two-layer structure in which a liquid electrolyte 14a and a separator 14b are sequentially laminated, unlike the structure of FIG. 1, which includes only the liquid electrolyte 14a. In FIG. 2, the liquid electrolyte 14a may be adjacent to the protection film 13. The liquid electrolyte 14a and the separator 14b in FIG. 2 may be collectively referred to as an electrolyte 14. The separator 14b may be a monolayer or a multilayer including at least two layers of polyethylene, polypropylene, polyvinylidene fluoride, or a combination thereof. For example, the separator 14b may be a mixed multilayer, such as a two-layer separator of polyethylene/polypropylene, a three-layer separator of polyethylene/polypropylene/polyethylene, or a three-layer separator of polypropylene/polyethylene/polypropylene.

In some embodiments, the lithium metal battery may further include at least one selected from a polymeric ionic liquid, a solid electrolyte, and a gel electrolyte, in addition to the liquid electrolyte and the separator.

In FIGS. 1 and 2, the positive electrode 11 may be a porous positive electrode. The porous positive electrode may be a positive electrode including pores, or any positive electrode that allows permeation of liquid electrolyte thereinto by capillary action.

For example, the porous positive electrode may be a positive electrode that may be obtained by coating a positive active material composition including a positive active material, a conducting agent, a binder, and a solvent, and drying the resulting structure. The resulting positive electrode may include pores among particles of the positive active material. The porous positive electrode may be impregnated with liquid electrolyte.

In some embodiments, the positive electrode may include a liquid electrolyte, a gel electrolyte, a solid electrolyte, or the like. The liquid electrolyte, the gel electrolyte, and the solid electrolyte may be any electrolytes available for a lithium metal battery in the art that do not react with the positive active material, and thus prevent deterioration of the positive active material during charging and discharging.

In FIGS. 1 and 2, the negative electrode 12 may be a lithium metal thin film. The lithium metal thin film may have a thickness of about 100 $\mu$m or less, for example, about 50 $\mu$m or less.

The protection film 13 may perform its own protective function with good mechanical properties, without containing an organic solvent such as a carbonate-based solvent. Further, the protection film 13 is not soluble in an ionic liquid and an organic solvent such as an ether-based solvent or a carbonate-based solvent. Further, when the protection film 13 is laminated on a lithium metal electrode (such as the negative electrode 12), the protection film 13 may suppress the growth of lithium dendrites on the surface of the negative electrode 12 after charging and discharging as a result of good interfacial characteristics with respect to lithium metal, and may also prevent a short circuit in the lithium metal battery which may be caused by cracking of the protection film 13. Further, the protection film 13 may be stable against a liquid electrolyte.

Each component of a lithium metal battery according to an exemplary embodiment as described above and a method of manufacturing a lithium metal battery including such components are described more in detail as follows.

A positive active material for the positive electrode may include at least one selected from lithium cobalt oxide, lithium nickel cobalt manganese oxide, lithium nickel cobalt aluminum oxide, lithium iron phosphate, and lithium manganese oxide, but it is not limited thereto. Any positive active material available in the art may be used.

For example, the positive active material may be a compound represented by one of the following formulas: $Li_aA_{1-b}B'_bD'_2$ (wherein $0.90 \le a \le 1.8$ and $0 \le b \le 0.5$); $Li_aE_{1-b}B'_bO_{2-c}D'_c$ (wherein $0.90 \le a \le 1.8$, $0 \le b \le 0.5$, and $0 \le c \le 0.05$); $LiE_{2-b}B'_bO_{4-c}D'_c$ (wherein $0 \le b \le 0.5$ and $0 \le c \le 0.05$); $Li_aNi_{1-b-c}Co_bB'_cD'_\alpha$ (wherein $0.90 \le a \le 1.8$, $0 \le b \le 0.5$, $0 \le c \le 0.05$, and $0 < \alpha \le 2$); $Li_aNi_{1-b-c}Co_bB'_cO_{2-\alpha}F'_\alpha$ (wherein $0.90 \le a \le 1.8$, $0 \le b \le 0.5$, $0 \le c \le 0.05$, and $0 < \alpha < 2$); $Li_aNi_{1-b-c}Co_bB'_cO_{2-\alpha}F'_\alpha$ (wherein $0.90 \le a \le 1.8$, $0 \le b \le 0.5$, $0 \le c \le 0.05$, and $0 < \alpha \le 2$); $Li_aNi_{1-b-c}Mn_bB'_cD'_\alpha$ (wherein $0.90 \le a \le 1.8$, $0 \le b \le 0.5$, $0 \le c \le 0.05$, and $0 < \alpha \le 2$);

$Li_aNi_{1-b-c}Mn_bB'_cO_{2-\alpha}F'_\alpha$ (wherein 0.90≤a≤1.8, 0≤b≤0.5, 0≤c≤0.05, and 0<α≤2); $Li_aNi_{1-b-c}Mn_bB'_cO_{2-\alpha}F'_\alpha$ (wherein 0.90≤a≤1.8, 0≤b≤0.5, 0≤c≤0.05, and 0<α< 2); $Li_aNi_bE_cG_dO_2$ (wherein 0.90≤a≤1.8, 0≤b≤0.9, 0≤c≤0.5, and 0.001≤d≤0.1); $Li_aNi_bCo_cMn_dGeO_2$ (wherein 0.90≤a≤1.8, 0≤b≤0.9, 0≤c≤0.5, 0≤d≤0.5, and 0.001≤e≤0.1); $Li_aNiG_bO_2$ (wherein 0.90≤a≤1.8 and 0.001≤b≤0.1); $Li_aCoG_bO_2$ (wherein 0.90≤a≤1.8, and 0.001≤b≤0.1); $Li_aMnG_bO_2$ (wherein 0.90≤a≤1.8 and 0.001≤b≤0.1); $Li_aMn_2G_bO_4$ (wherein 0.90≤a≤1.8, and 0.001≤b≤0.1); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (wherein 0≤f≤2); $Li_{(3-f)}Fe_2(PO_4)_3$ (wherein 0≤f≤2); and $LiFePO_4$.

In the formulas above, A may be selected from nickel (Ni), cobalt (Co), manganese (Mn), and a combination thereof; B' may be selected from aluminum (Al), nickel (Ni), cobalt (Co), manganese (Mn), chromium (Cr), iron (Fe), magnesium (Mg), strontium (Sr), vanadium (V), a rare earth element, and a combination thereof; D' may be selected from oxygen (O), fluorine (F), sulfur (S), phosphorus (P), and a combination thereof; E may be selected from cobalt (Co), manganese (Mn), and a combination thereof; F' may be selected from fluorine (F), sulfur (S), phosphorus (P), and a combination thereof; G is selected from aluminum (Al), chromium (Cr), manganese (Mn), iron (Fe), magnesium (Mg), lanthanum (La), cerium (Ce), strontium (Sr), vanadium (V), and a combination thereof; Q may be selected from titanium (Ti), molybdenum (Mo), manganese (Mn), and a combination thereof; I' may be selected from chromium (Cr), vanadium (V), iron (Fe), scandium (Sc), yttrium (Y), and a combination thereof; and J may be selected from vanadium (V), chromium (Cr), manganese (Mn), cobalt (Co), nickel (Ni), copper (Cu), and a combination thereof.

For example, the positive active material may be a compound represented by Formula 10, a compound represented by Formula 11, or a compound represented by Formula 12.

Formula 10 $Li_aNi_bCo_cMn_dO_2$

In Formula 10, 0.90≤a≤1.8, 0≤b≤0.9, 0≤c≤0.5, and 0≤d≤0.5;

Formula 11 $Li_2MnO_3$;

and

Formula 12 $LiMO_2$

In Formula 12, M may be Mn, Fe, Co, or Ni.

The positive electrode may be prepared as follows.

A positive active material composition as a mixture of a positive electrode active material, a binder, and a solvent is prepared.

A conducting agent may be further added into the positive active material composition. The positive active material composition may be directly coated on a metallic current collector and dried to prepare a positive electrode plate. Alternatively, the positive active material composition may be cast on a separate support to form a positive active material film, which may then be separated from the support and then laminated on a metallic current collector to prepare a positive electrode plate.

The current collector may comprise a metal such as nickel, aluminum, titanium, copper, gold, silver, platinum, an aluminum alloy, or stainless steel, a film prepared by plasma-spraying or arc-spraying a carbonaceous material, activated carbon fiber, nickel, aluminum, zinc, copper, tin, lead, and any alloy thereof, or a conductive film prepared by dispersing a conductive material in a rubber or a resin such as styrene-ethylene-butylene-styrene copolymer (SEBS). For example, aluminum, nickel, or stainless steel may be used. Particularly, aluminum may be used since it can be easily processed into a thin film and is inexpensive. A shape of the current collector is not particularly limited. For example, the current collector may have a thin film shape, a flat plate shape, a mesh shape, a net shape, a punched shape, an embossing shape, or any combination thereof, e.g. a mesh shape flat plate or the like. For example, the current collector may have an uneven surface formed by etching.

The binder is a composition that contributes binding with an active material and a conductive material and binding with a current collector, and thus an amount of the binder added may be from about 1 part to about 50 parts by weight, for example, about 5 parts to about 30 parts by weight based on 100 parts by weight of the total weight of the positive electrode active material. Examples of the binder include polyvinylidene fluoride (PVDF), polyvinyl alcohol, carboxymethylcellulose (CMC), starch, hydroxypropylcellulose, reproduced cellulose, polyvinylpyrrolidone, polytetrafluoroethylene, polyethylene, polypropylene, ethylene-propylene-diene terpolymer (EPDM), sulfonated EPDM, styrene butadiene rubber, fluorine rubber, and various copolymers. A content of the binder may be from about 2 parts to about 5 parts by weight, for example, from about 3 parts to about 4 parts by weight based on 100 parts by weight of the total weight of the positive electrode active material. While not wishing to be bound by theory, it is understood that when a content of the binder is within this range, a binding force of the active material layer with respect to the current collector is satisfactory.

The conductive agent may be any material that does not cause chemical change in the battery and have conductivity. Examples of the conductive agent include graphite such as natural graphite or artificial graphite; carbon blacks, such as carbon black, acetylene black, Ketjen black, channel black, furnace black, lamp black, or summer black; conductive fibers, such as carbon fibers or metal fibers; carbon fluoride; metal powder, such as aluminum or nickel powder; conductive whisker, such as zinc oxide or potassium titanate; a conductive metal oxide, such as a titanium oxide; and a conductive polymer, such as a polyphenylene derivative.

A content of the conducting agent may be from about 1 parts to about 10 parts by weight for example, from about 1 parts to about 5 parts by weight based on 100 parts by weight of the total weight of the positive electrode active material. While not wishing to be bound by theory, it is understood that when a content of the conducting agent is within these ranges, the finally obtained electrode may have excellent conductivity characteristic.

Examples of the solvent include N-methylpyrrolidone (NMP).

A content of the solvent may be from about 100 parts to about 2,000 parts, for example, from about 500 parts to about 1,000 parts by weight based on 100 parts by weight of the positive electrode active material. While not wishing to be bound by theory, it is understood that when a content of the solvent is within these ranges, a process for forming the active material layer may be easily carried out.

If desired, a plasticizer may be further added into the positive active material composition to form electrode plates including pores. The amounts of the cathode active material, the conducting agent, the binder, and the solvent may be the amounts that are generally used in lithium metal batteries in the art. At least one of the conducting agent and the solvent may not be used depending on the use and the structure of a lithium metal battery.

The negative electrode may be a negative electrode according to any of the above-described embodiments.

A negative electrode includes:

a lithium metal electrode; and
a protection film disposed on at least a portion of the lithium metal electrode,
wherein the protection film includes at least one first polymer selected from a polyvinyl alcohol graft copolymer, a crosslinked copolymer formed from the polyvinyl alcohol graft copolymer, a polyvinyl alcohol crosslinked copolymer, and a blend thereof.

The lithium metal electrode may be a lithium metal thin film or a lithium alloy thin film.

A lithium metal alloy for the negative electrode may include lithium, and a metal/metalloid alloyable with lithium, an alloy thereof, or an oxide thereof. Examples of the metal/ metalloid alloyable with lithium, an alloy thereof, or an oxide thereof are Si, Sn, Al, Ge, Pb, Bi, Sb, a Si-Y alloy (wherein Y is an alkali metal, an alkali earth metal, a Group 13 to 16 element, a transition metal, a rare earth element, or a combination thereof except for Si), a Sn-Y alloy (wherein Y is an alkali metal, an alkali earth metal, a Group 13 to 16 element, a transition metal, a rare earth element, or a combination thereof except for Sn), and $MnO_x$ (wherein $0 < x \leq 2$). Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), or a combination thereof.

In some embodiments, the electrolyte of the lithium metal battery may include a liquid electrolyte and a separator.

The separator may be an insulating thin film having high ion permeability and high mechanical strength. The separator may have a pore diameter of about 0.01 $\mu$m to about 10 $\mu$m, and a thickness of about 5 $\mu$m to about 20 $\mu$m. Examples of the separator are an olefinic polymer, such as polypropylene, and sheets or non-woven fabric made of glass fiber or polyethylene. When the electrolyte of the lithium metal battery is a solid polymer electrolyte, the solid polymer electrolyte may also serve as a separator.

In some embodiments, the liquid electrolyte may include at least one selected from an ionic liquid, an organic solvent, and a lithium salt.

In some embodiments, the lithium metal battery may further include at least one selected from a polymeric ionic liquid, a polymer electrolyte, and a gel electrolyte as described above.

A lithium metal battery according to any of the above-described embodiments may have improved capacity and improved lifetime characteristics, and thus may be used in a battery cell for use as a power source of a small device, and may also be used as a unit battery of a medium-large size battery pack or battery module that include a plurality of battery cells for use as a power source of a medium-large size device.

Examples of the medium-large size device are electric vehicles (EVs), including hybrid electric vehicles (HEVs) and plug-in hybrid electric vehicles (PHEVs); electric two-wheeled vehicles, including E-bikes and E-scooters; power tools; power storage devices; and the like, but are not limited thereto.

As used herein, the term "alkyl" refers to a completely saturated branched or unbranched (or straight-chained or linear) hydrocarbon group. Non-limiting examples of the "alkyl" group are methyl, ethyl, n-propyl, iso-propyl, n-butyl, iso-butyl, sec-butyl, n-pentyl, iso-pentyl, neo-pentyl, n-hexyl, 3-methylhexyl, 2,2-dimethylpentyl, 2,3-dimethylpentyl, and n-heptyl.

At least one hydrogen atom of the alkyl group may be substituted with a halogen atom, a C1-C20 alkyl group substituted with a halogen atom (for example, $CCF_3$, $CHCF_2$, $CH_2F$, $CCl_3$, and the like), a C1-C20 alkoxy group, a C2-C20 alkoxyalkyl group, a hydroxyl group, a nitro group, a cyano group, an amino group, an amidino group, a hydrazine group, a hydrazone group, a carboxyl group or a salt thereof, a sulfonyl group, a sulfamoyl group, a sulfonic acid group or a salt thereof, a phosphoric acid group or a salt thereof, a C1-C20 alkyl group, a C2-C20 alkenyl group, a C2-C20 alkynyl group, a C1-C20 heteroalkyl group, a C6-C20 aryl group, a C7-C20 arylalkyl group, a C6-C20 heteroaryl group, a C7-C20 heteroarylalkyl group, a C6-C20 heteroaryloxy group, a C7-C20 heteroaryloxyalkyl group, or a C6-C20 heteroarylalkyl group.

As used herein, the term "halogen atom" indicates fluorine, bromine, chloride, and iodine.

As used herein, the term "alkenyl" group indicates a branched or unbranched hydrocarbon group with at least one carbon-carbon double bond. Non-limiting examples of the alkenyl group are vinyl, allyl, butenyl, iso-propenyl, and iso-butenyl. At least one hydrogen atom in the alkenyl group may be substituted with any of the substituents for the alkyl group as described above.

As used herein, the term "alkynyl" indicates a branched or unbranched hydrocarbon group with at least one carbon-carbon triple bond. Non-limiting examples of the "alkynyl" group are ethynyl, butynyl, iso-butynyl, and propynyl. At least one hydrogen atom of the "alkynyl" group may be substituted with any of the substituents for the alkyl group as described above.

As used herein, the term "aryl" is construed as including a group with an aromatic ring optionally fused to at least one carbocyclic group. Non-limiting examples of the "aryl" group are phenyl, naphthyl, and tetrahydronaphthyl. At least one hydrogen atom of the "aryl" group may be substituted with any of the substituents for the alkyl group as described above.

As used herein, the term "heteroaryl" group indicates a monocyclic or bicyclic aromatic organic group including at least one heteroatom selected from among nitrogen (N), oxygen (O), phosphorous (P), and sulfur (S), wherein the rest of the cyclic atoms are all carbon. The heteroaryl group may include, for example, one to five heteroatoms, and in some embodiments, may include a five- to ten-membered ring. In the heteroaryl group, S or N may be present in various oxidized forms. Non-limiting examples of the heteroaryl group are thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazole-5-yl, tetrazolyl, , 2-pyrazine-2-yl, pyrazine-4-yl, pyrazine-5-yl, pyrimidine-2-yl, pyrimidine-4-yl, or pyrimidin-5-yl.

The term "heteroaryl" indicates a heteroaromatic ring optionally fused to at least one of an aryl group, a cycloaliphatic group, and a heterocyclic group.

As used herein, the term "carbocyclic" group indicates a saturated or partially unsaturated non-aromatic monocyclic, bicyclic, or tricyclic hydrocarbon group. Non-limiting examples of the monocyclic hydrocarbon group are cyclopentyl, cyclopentenyl, cyclohexyl, and cyclohexenyl. Non-limiting examples of the bicyclic hydrocarbon group are bornyl, decahydronaphthyl, bicyclo[2.1.1]hexyl, bicyclo[2.2.1]heptyl, bicyclo[2.2.1]heptenyl, or bicyclo[2.2.2]octyl. A non-limiting example of the tricyclic hydrocarbon is adamantly group.

As used herein, the term "heterocyclic" group indicates a C5-20 cyclic \group, for example, C5-C10 cyclic group, including at least one hetero atom. For example, the at least one hetero atom is selected from S, N, O, and B.

As used herein, the terms "alkoxy", "aryloxy", and "heteroaryloxy" indicate alkyl, aryl, and heteroaryl, respectively, each bound to oxygen atom.

Thereinafter, one or more embodiments of the present disclosure will be described in detail with reference to the following examples. However, these examples are not intended to limit the scope of the one or more embodiments of the present disclosure.

## EXAMPLES

### Example 1: Preparation of negative electrode

10 grams (g) of polyvinyl alcohol (having a weight average molecular weight of $93.5\times10^3$ Daltons (Da), a saponification degree of about 99 mole percent (mol%), and a polymerization degree of 1,700) was dissolved in 10 g of acrylonitrile and 100 milliliters (ml) of dimethylsulfoxide (DMSO) in a reaction flask under a nitrogen gas atmosphere. 0.01 g of potassium persulfate was then added thereto, and a stirring process was performed at about 60°C for 5 hours to carry out a graft reaction of polyvinyl alcohol and acrylonitrile.

After completion of the reaction, the acrylonitrile remaining non-reacted was separated from the reaction product by dissolving it with dimethylformamide several times, followed by adding water and dimethylformamide to obtain a precipitate and purifying the precipitate. The resulting product was dried at 40°C for 34 hours to obtain a polyvinyl alcohol acrylonitrile graft copolymer. The amount of acrylonitrile in the polyvinyl alcohol acrylonitrile graft copolymer was about 60 moles (mol) based on 100 mol of polyvinyl alcohol.

0.3 g of the polyvinyl alcohol acrylonitrile graft copolymer was dissolved in 5.7 ml of DMSO, and stirred at 90°C for 2 hours to obtain a polyvinyl alcohol acrylonitrile graft copolymer (PVA-g-AN copolymer) solution.

0.2 g of lithium bis(fluorosulfonyl)imide (LiFSI) was added to the polyvinyl alcohol acrylonitrile graft copolymer solution to obtain a protection film forming composition. A mixed weight ratio of the graft copolymer to the lithium salt in the protection film forming composition was about 3:2. The amount of the lithium salt was about 66 parts by weight based on 100 parts by weight of the graft copolymer. The protection film forming composition was diluted about 6-fold, cast on a lithium metal thin film having a thickness of about 20 micrometers (μm) using a doctor blade, and then dried in a convection oven at 40°C for about 48 hours. Subsequently, the resulting product was dried in a vacuum oven of 40°C for about 24 hours to prepare a negative electrode having a protection film including the polyvinyl alcohol acrylonitrile graft copolymer on the lithium metal thin film. The protection film had a thickness of about 5 μm.

Example 2: Preparation of negative electrode

A negative electrode was prepared in the same manner as in Example 1, except that the protection film forming composition was diluted about 10-fold and the protection film had a thickness of about 1 μm.

Example 3: Preparation of negative electrode

A negative electrode was prepared in the same manner as in Example 1, except that a PVA-g-AN copolymer blend solution obtained as described below, instead of the PVA-g-AN copolymer solution, was used.

The PVA-g-AN copolymer blend solution was obtained by mixing a PVA-g-AN copolymer and polyacrylonitrile (having a weight average molecular weight of $150 \times 10^3$ Da) in a weight ratio of about 9:1, dissolving 0.3 g of the mixture in 5.7 ml of DMSO, and stirring the resulting mixture at about 90°C for about 2 hours.

Example 4: Manufacturing of lithium metal battery

$LiCoO_2$, a conducting agent (Super-P, available from Timcal Ltd.), polyvinylidene fluoride (PVdF), and N-methylpyrrolidone (NMP) were mixed together to obtain a positive electrode composition. A mixed weight ratio of $LiCoO_2$, the conducting agent, and PVdF in the positive electrode composition was about 97:1.5:1.5.

The positive electrode composition was coated on an aluminum foil (having a thickness of about 15 μm), dried at about 25°C, and then thermally treated at about 110°C under vacuum to manufacture a positive electrode.

A lithium metal battery was manufactured by laminating a polypropylene separator (Celgard 3510) and the positive electrode on the protection film of the negative electrode prepared in Example 1, and then adding a liquid electrolyte to the resulting structure. An electrolyte solution obtained by dissolving $LiPF_6$ in a mixed solvent of diethyl carbonate (DEC) and fluoroethylene carbonate (FEC) in a volume ratio of about 6:4 to prepare a 1.3 molar (M) solution was used as the liquid electrolyte.

Example 5: Manufacturing of lithium metal battery

A lithium metal battery was manufactured by in the same manner as in Example 4, except that the negative electrode of Example 2 instead of the negative electrode of Example 1 was used.

Example 6: Manufacturing of lithium metal battery

A lithium metal battery was manufactured by in the same manner as in Example 4, except that the negative electrode of Example 3 instead of the negative electrode of Example 1 was used, and an electrolyte solution of 1.0 M solution of LiFSI in a mixed solvent of 1,2-dimethoxyethane (DME) and 1,1,2,2-tetrafluoroethyl 2,2,3,3-tetrafluoropropyl ether (TTE) in a volume ratio of about 2:8, instead of the 1.3 M electrolyte solution of $LiPF_6$ dissolved in a mixed solvent of diethyl carbonate (DEC) and fluoroethylene carbonate (FEC) in a volume ratio of 6:4, was used as the liquid electrolyte.

Example 7: Preparation of protection film

10 g of polyvinyl alcohol (having a weight average molecular weight of $93.5 \times 10^3$ Da, and a saponification

degree of about 99 mol% was dissolved in 10 g of acrylonitrile and 100 ml of DMSO in a reaction flask under a nitrogen gas atmosphere. 0.01 g of potassium persulfate was then added thereto, and a stirring process was performed at about 60°C for 2 hours to carry out a graft reaction of polyvinyl alcohol and acrylonitrile.

When the reaction was completed, water and dimethylformamide were added to the reaction product to obtain a precipitate, followed by purifying the precipitate and drying to obtain a polyvinyl alcohol acrylonitrile graft copolymer. The amount of acrylonitrile in the polyvinyl alcohol acrylonitrile graft copolymer was about 60 mol based on 100 mol of polyvinyl alcohol.

0.1 g of LiFSI and 5.7 ml of DMSO were added to 0.3 g of the polyvinyl alcohol acrylonitrile graft copolymer to obtain a protection film forming composition. A mixed weight ratio of the polyvinyl alcohol acrylonitrile graft copolymer to the lithium salt in the protection film forming composition was about 3:1.

6 g of the protection film forming composition was placed on a Teflon Petri dish and dried on a hot plate at about 60°C for about 24 hours. Subsequently, the resulting product was dried in a vacuum oven at about 40°C for about 24 hours to form a protection film having a thickness of about 5 μm including a graft copolymer and a lithium salt.

Example 8: Preparation of protection film

A protection film having a thickness of about 5 μm including a graft copolymer and a lithium salt was prepared in the same manner as in Example 7, except that a mixed weight ratio of the polyvinyl alcohol graft copolymer to the lithium salt in the protection film forming composition was about 3:2.

Example 9: Preparation of protection film

A protection film having a thickness of about 5 μm including a graft copolymer and a lithium salt was prepared in the same manner as in Example 7, except that a mixed weight ratio of the polyvinyl alcohol graft copolymer to the lithium salt in the protection film forming composition was about 3:4.

Comparative Example 1: Lithium metal thin film

A lithium metal thin film having a thickness of about 20 μm was used as it was.

Comparative Example 2: Preparation of negative electrode

1,000 ml of distilled water, 20 ml of acrylonitrile, and 5 ml of methyl methacrylate were added in a reaction flask under a nitrogen atmosphere. 0.01 g of potassium persulfate was then added thereto, and a stirring process was performed at about 60°C for about 24 hours to carry out a graft reaction of acrylonitrile and methyl methacrylate.

When the reaction was completed, distilled water was added to the reaction product to obtain a precipitate, followed by purifying the precipitate and drying to obtain an acrylonitrile methyl methacrylate (P(AN-co-MMA)) copolymer. The amount of methyl methacrylate in the P(AN-co-MMA) was about 100 mol based on 100 mol of acrylonitrile.

0.2 g of LiFSI and 5.7 ml of DMSO were added to 0.3 g of the P(AN-co-MMA) copolymer to obtain a protection film forming composition. A mixed weight ratio of the copolymer to the lithium salt in the protection film forming composition was about 3:2. The protection film forming composition was diluted about 6-fold, cast on a lithium metal thin film having a thickness of about 20 μm using a doctor blade, and then dried in a convection oven at about 40°C for about 48 hours. Subsequently, the resulting product was dried in a vacuum oven at about 40°C for about 24 hours to prepare a negative electrode having a protection film including the acrylonitrile methylmethacrylate P(AN-co-MMA) copolymer on the lithium metal thin film. The protection film had a thickness of about 5 μm.

Comparative Examples 3 and 4: Manufacturing of lithium metal batteries

Lithium metal batteries were manufactured in the same manner as in Example 4, except that the negative electrodes of Comparative Examples 1 and 2 instead of the negative electrode of Example 1 were used, respectively.

Comparative Example 5: Preparation of protection film

A protection film was prepared in the same manner as in Example 7, except that a mixture of polyacrylonitrile (having a weight average molecular weight of $150\times10^3$ Da) with polyvinyl alcohol in a weight ratio of about 3:7, instead of the polyvinyl alcohol acrylonitrile graft copolymer, was used to prepare a protection film forming composition.

Comparative Example 6: Preparation of protection film

A protection film was prepared in the same manner as in Comparative Example 5, except that the weight ratio of polyacrylonitrile to polyvinyl alcohol was about 5:5.

Comparative Example 7: Preparation of protection film

A protection film was prepared in the same manner as in Comparative Example 5, except that the weight ratio of polyacrylonitrile to polyvinyl alcohol was about 1:9.

Evaluation Example 1: IR analysis

Example 1

The PVA-g-AN copolymer of Example 1 was analyzed by infrared (IR) spectroscopy.

The results of the IR analysis are shown in FIG. 3. Referring to FIG. 3, it was found that the PVA-g-AN copolymer of Example 1 includes a cyano group and a hydroxy group. A structure of the PVA-g-AN copolymer was identified from this result.

Comparative Example 2

An IR analysis was conducted on the P(AN-co-MMA) copolymer of Comparative Example 2. The results of the IR analysis are shown in FIG. 4.

Referring to FIG. 4, a structure of the P(AN-co-MMA) copolymer of Comparative Example 2 is identified.

Evaluation Example 2: Differential Scanning Calorimetry (DSC) Analysis

A DSC analysis was performed on the PVA-g-AN copolymer film of Example 1 and the P(AN-co-MMA) copolymer film of Comparative Example 2 by using DSC analyzer TA Q2000 (available from TA Instruments Corporation).

The DSC results of the PVA-g-AN copolymer film of Example 1 and the P(AN-coMMA) copolymer film of Comparative Example 2 are shown in FIGS. 5 and 6, respectively.

Referring to FIGS. 5 and 6, it was found that target copolymers were obtained, based on an endothermic peak pattern at a glass transition temperature ($T_g$) of about 150°C or less.

Evaluation Example 3: Impedance measurement

Li/Li symmetric cells A and B were manufactured using the negative electrode prepared according to Example 1 and the lithium metal thin film prepared according to Comparative Example 1, respectively, and an electrolyte. An electrolyte solution including a 1.3 M $LiPF_6$ solution in a mixed solvent of diethyl carbonate and fluoroethylene carbonate in a volume ratio of about 6:4 was used as the electrolyte.

Impedance measurements were performed on the Li/Li symmetric cells A and B by using a Solartron 1260A Impedance/Gain-Phase Analyzer) at an amplitude of about ±10 millivolts (mV) in a frequency range of about 0.1 Hertz (Hz) to about 1 megaHertz (MHz) at about 25°C according to a 2-probe method.

Nyquist plots obtained from the impedance measurements that were performed after 69 hours, 79 hours, and 84 hours from the manufacture of the Li and Li symmetric cells A and B using the negative electrode of Example 1 and the lithium metal thin film of Comparative Example 1, respectively, are shown in FIGS. 7 and 8. In FIGS. 7 and 8, an interfacial resistance ($R_{inf}$) between the electrolyte and the negative electrode is determined according to the positions and sizes of semicircles. The interfacial resistances of the symmetric cells A and B obtained by analyzing the graphs of FIGS. 7 and 8 are shown in Table 1.

Table 1

| Time (hr) | Interfacial resistance $R_i$ of symmetric cell A (ohm) | Interfacial resistance $R_i$ of symmetric cell B (ohm) |
|---|---|---|
| 69 | 61 | 48 |
| 79 | 77 | 1564 |
| 84 | 82 | 3269 |

Referring to Table 1 and FIGS. 7 and 8, it was found that an interfacial resistance increase with time was reduced in the Li/Li symmetric cell A including the negative electrode of Example 1, compared to the Li/Li symmetric cell B including the lithium metal thin film of Comparative Example 1. These results indicate that the protection film of the negative electrode of Example 1 had improved interfacial stabilization performance.

Evaluation Example 4: Measurement of tensile modulus and elongation Example 7 and Comparative Examples 5 to 7

Tensile moduli of the PVA-g-AN protection film of Example 7 and the protection films of Comparative Examples 5 to 7 were measured using a DMA800 (available from TA Instruments Corporation). Film specimens for tensile modulus measurement were prepared according to the ASTM standard D412 (Type V specimens). The tensile modulus is also called as Young's modulus.

Changes in strain with respect to stress in each of the protection films were measured at about 25°C, a relative humidity of about 30%, and a rate of 5 millimeters per minute (mm/min). The results are shown in Table 2 and FIG. 9. FIG. 9 is a stress-strain curve of the PVA-g-AN film prepared in Example 7.

Table 2

| Example | Tensile modulus (MPa) | Elongation (%) |
|---|---|---|
| Example 7 | 250 | 350 |
| Comparative Example 5 | 469 | <20 |
| Comparative Example 6 | 574 | <6 |
| Comparative Example 7 | 115.2 | <20 |

Referring to Table 2 and FIG. 9, it was found that the protection film prepared of Example 7 had a reduced hardness and an increased toughness with a tensile modulus of about 250 megaPascals (MPa). The protection film of Example 7 was ensured to have an elongation of about 350% due to the basic physical properties of polymer, not to the inclusion of lithium salt.

Referring to Table 3, the protection films of Comparative Examples 5 and 7 exhibited brittle characteristics due to a small strain level with an elongation of less than 20%, though they had a high degree of tensile modulus. However, the protection film of Example 1 was satisfactory both in tensile modulus and elongation, and consequentially had improved toughness. Toughness refers to a characteristic of material which is not damaged by an external force and which is durable against strong impacts.

Example 7 and Comparative Example 2

Tensile modulus of the PVA-g-AN protection film of Example 7 and the P(AN-coMMA) protection film of Comparative Example 2 were measured using a DMA800 (available from TA Instruments Corporation). Film specimens for tensile modulus measurement were prepared according to the ASTM standard D412 (Type V specimens). The tensile modulus is also called as Young's modulus.

Changes in strain with respect to stress in each of the protection films were measured at about 25°C, a relative humidity of about 30% and a rate of 5 mm/min. The results were shown in Table 3 and FIG. 10.

Table 3

| Example | Tensile modulus (MPa) | Elongation (%) |
|---|---|---|
| Example 7 | 250 | 350 |
| Comparative Example 2 | 1900 | 3.5 |

Referring to Table 3 and FIG. 10, it was found that the protection film of Example 7 had a small tensile modulus but increased toughness due to a high elongation compared to the protection film of Comparative Example 2.

Evaluation Example 4: Charge/discharge characteristics (capacity retention rate)

Example 4 and Comparative Example 3

Each of the lithium metal batteries of Example 4 and Comparative Example 3 was charged at room temperature (25°C) with a constant current of 0.5C rate in a voltage range of about 3.0 volts (V) to about 4.4 V (with respect to Li) until a cut-off voltage of about 4.4 V, and then with a constant voltage of 4.4 V to a current of 0.1C, and was then discharged with a constant current of 0.5C to a cut-off voltage of 3.0 V.
This cycle of charging and discharging was repeatedly performed 60 times.
Charge/discharge efficiencies and capacity retention rate at 60$^{th}$ cycle were calculated using Equations 1 and 2:

Equation 1

$$\text{Charge/discharge efficiency} = \{(\text{Discharge capacity at } 60^{th} \text{ cycle})/(\text{Charge capacity at } 60^{th} \text{ cycle})\}\times 100$$

Equation 2

$$\text{Capacity retention rate} = \{(\text{Discharge capacity at } 60^{th} \text{ cycle})/(\text{Discharge capacity at } 1^{st} \text{ cycle})\}\times 100$$

The results of evaluating capacity retention rates and charge/discharge efficiency characteristics of the lithium metal batteries of Example 4 and Comparative Example 3 are shown in Table 4 and FIGS. 11 and 12. In FIGS. 11 and 12, 'PVA-g-AN' and 'Bare Li' denote the lithium metal batteries of Example 4 and Comparative Example 3, respectively.

Table 4

| Example | Capacity retention rate (%) at 60$^{th}$ cycle | Charge/discharge efficiencies (%) |
|---|---|---|
| Example 4 | 90.2 | 99.7 |
| Comparative Example 3 | 64.9 | 98 |

It was found from Table 4 and FIGS. 11 and 12 that the lithium metal battery of Example 4 had an improved capacity retention rate compared to the lithium metal battery of Comparative Example 3. As shown in FIG. 12, a charge/discharge efficiency in the lithium metal battery of Comparative Example 3 was rapidly decreased after 30 cycles, while the lithium metal battery of Example 4 had a charge/discharge efficiency of 99% or greater that was maintained until the 60$^{th}$ cycle.

Comparative Example 3 and Comparative Example 4

A charge/discharge process was repeatedly performed 100 times on the lithium metal batteries of Comparative Examples 3 and 4 in the same manner as described above. Changes in discharge capacity and charge/discharge efficiency in the lithium metal batteries of Comparative Examples 3 and 4 were measured, and the results are shown in FIGS. 13 and 14, respectively. In FIGS. 13 and 14, 'Bare Li' and 'P(AN-MMA)' denote the lithium metal batteries of Comparative Example 3 and Comparative Example 4, respectively.
As shown in FIGS. 13 and 14, the lithium metal battery of Comparative Example 4 represented improved capacity retention rate compared to the lithium metal battery of Comparative Example 3. However, both of the lithium metal batteries of Comparative Examples 3 and 4 represented a rapidly decreased charge/discharge efficiency after 30 cycles.
It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.
While one or more exemplary embodiments have been described with reference to the figures, it will be understood by those of ordinary skill in the art that various changes in form and details may be made therein without departing from the scope of the present disclosure as defined by the following claims.

## Claims

1. A lithium metal battery comprising:

   a positive electrode,
   a negative electrode,
   an electrolyte interposed between the positive electrode and the negative electrode, and
   a separator;

   wherein the negative electrode comprises:

   a lithium metal electrode; and
   a protection film disposed on at least a portion of the lithium metal electrode,

   wherein the protection film comprises at least one first polymer selected from a polyvinyl alcohol graft copolymer, a crosslinked polyvinyl alcohol graft copolymer, a crosslinked polyvinyl alcohol copolymer, and a blend thereof.

2. The lithium metal battery of claim 1, wherein the polyvinyl alcohol graft copolymer is a graft copolymer of a polyvinyl alcohol and an olefinic monomer, preferably wherein:

   the olefinic monomer comprises at least one selected from acrylonitrile, styrene, vinyl acetate, 4-bromostyrene, tert-butylstyrene, divinyl benzene, methyl (meth)acrylate, ethyl (meth)acrylate, propyl (meth)acrylate, n-butyl (meth)acrylate, isobutyl (meth)acrylate, ethylene, propylene, isobutylene, N-isopropyl acrylamide, vinylidene fluoride, 4-methyl pentane-1, maleic anhydride, cyclohexyl (meth)acrylate, cyclohexyl vinyl ether, tert-butyl vinyl ether, vinyl cyclohexane, butenylene terephthalates, ethenylene terephthalate, and vinyl pyridine; and/or
   an amount of the olefinic monomer is in a range of 50 moles to 200 moles based on 100 moles of the polyvinyl alcohol.

3. The lithium metal battery of claim 1 or 2, wherein:

   the protection film has a tensile modulus of 10.0 MegaPascals or greater at 25°C;
   the protection film has an elongation of 50% or greater at 25°C; and/or
   the protection film has a peel strength of 5.0 MegaPascals or greater at 25°C.

4. The lithium metal battery of any of claims 1-3, wherein:

   the first polymer has a weight average molecular weight of 30,000 Daltons or greater;
   the first polymer has a saponification degree of 85 mole percent; and/or
   the first polymer has a glass transition temperature in a range of 40°C to 80°C.

5. The lithium metal battery of any of claims 1-4, wherein the protection film further comprises at least one second polymer selected from a (meth)acryl polymer , and polyacrylonitrile, as a blend with the at least one first polymer or blend thereof, preferably wherein:

   the second polymer comprises at least one selected from polymethyl methacrylate, polymethyl acrylate, polyethyl methacrylate, polyethyl acrylate, polypropyl methacrylate, polypropyl acrylate, polybutyl acrylate, polybutyl methacrylate, polypentyl methacrylate, polypentyl acrylate, polycyclohexyl methacrylate, polycyclohexyl acrylate, polyhexyl methacrylate, polyhexyl acrylate, polyglycidyl acrylate, polyglycidyl methacrylate, and polyacrylonitrile; and/or
   an amount of the second polymer is in a range of 10 parts by weight to 50 parts by weight based on 100 parts by weight of the first polymer.

6. The lithium metal battery of any of claims 1-5, further comprising a lithium salt, preferably wherein:

   an amount of the lithium salt is in a range of 30 parts by weight to 200 parts by weight based on 100 parts by weight of the first polymer; and/or
   the lithium salt comprises at least one selected from LiSCN, $LiN(CN)_2$, $LiClO_4$, $LiBF_4$, $LiAsF_6$, $LiPF_6$, $LiCF_3SO_3$, $Li(FSO_2)_2N$, $Li(CF_3SO_2)_3C$, $LiN(SO_2C_2F_5)_2$, $LiN(SO_2CF_3)_2$, $LiSbF_6$, $LiPF_3(CF_2CF_3)_3$, $LiPF_3(CF_3)_3$, $LiB(C_2O_4)_2$,

LiCl, and LiI.

7. The lithium metal battery of any of claims 1-6, wherein the protection film further comprises:

a lithium salt, and wherein the protection film has an elongation of 50% or greater at 25°C;
at least one selected from a plurality of inorganic particles and an oligomer, preferably wherein the oligomer comprises at least one selected from polyethylene glycol dimethyl ether and polyethylene glycol diethyl ether and/or the plurality of inorganic particles comprises at least one selected from $SiO_2$, $TiO_2$, ZnO, $Al_2O_3$, $BaTiO_3$, graphene oxide, graphite oxide, carbon nanotube, $Fe_2O_3$, CuO, cage-structured silsesquioxane, and a metal-organic framework; and/or
an electrolyte, preferably wherein the electrolyte comprises at least one selected from a liquid electrolyte, a polymer electrolyte, a gel electrolyte, an ionic liquid, and a polymeric ionic liquid.

8. The lithium metal battery of claim 7, wherein the ionic liquid or the polymeric ionic liquid comprises:

i) at least one cation selected from an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, and a triazolium cation; and
ii) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N$-, and $(CF_3SO_2)_2N^-$.

9. The lithium metal battery of any of claims 1-8, wherein the protection film has a thickness of 1 micrometer to 20 micrometers.

10. The lithium metal battery of any of claims 1-9, wherein the protection film comprises a graft copolymer of polyvinyl alcohol and acrylonitrile, or a graft copolymer of polyvinyl alcohol and methyl methacrylate.

11. The lithium metal battery of any of claims 1-10, wherein:

the electrolyte is a liquid electrolyte, preferably wherein the liquid electrolyte comprises at least one selected from an organic solvent, an ionic liquid, and a lithium salt; or
the electrolyte comprises at least one selected from a solid electrolyte, a gel electrolyte, and a polymeric ionic liquid.

12. The lithium metal battery of claim 11, wherein the liquid electrolyte comprises at least one selected from ethylene carbonate, propylene carbonate, dimethyl carbonate, diethyl carbonate, ethyl methyl carbonate, fluoroethylene carbonate, $\gamma$-butyrolactone, dimethoxy ethane, diepoxy ethane, diethylene glycol dimethylether, dipropylene glycol dimethyl ether, trimethylene glycol dimethyl ether, triethylene glycol dimethyl ether, tetraethylene glycol dimethyl ether, polyethylene glycol dimethyl ether, succinonitrile, sulfolane, dimethyl sulfone, ethyl methyl sulfone, diethyl sulfone, adiponitrile, tetrahydrofuran, N-methylpyrrolidone, acetonitrile, benzonitrile, 2-methyltetrahydrofuran, dioxolane, 4-methyldioxolane, N,N-dimethylformamide, N,N-dimethylacetamide, dimethylsulfoxide, dioxane, 1,2-dimethoxyethane, dichloroethane, chlorobenzene, nitrobenzene, diethylene glycol, dimethyl ether, and 1,1,2,2-tetrafluoroethyl 2,2,3,3-tetrafluoropropyl ether.

13. The lithium metal battery of any of claims 1-12, having a structure in which: i) a lithium metal electrode, ii) a protection film comprising a polyvinyl alcohol graft copolymer, iii) a separator and a liquid electrolyte, and iv) a positive electrode are sequentially laminated.

## Patentansprüche

1. Lithiummetallbatterie umfassend:

eine positive Elektrode,
eine negative Elektrode,
ein Elektrolyt, das sich zwischen der positiven Elektrode und der negativen Elektrode befindet, und

ein Trennelement;
wobei die negative Elektrode Folgendes umfasst:

eine Lithiummetallelektrode; und
einen Schutzfilm, der auf mindestens einem Abschnitt der Lithiummetallelektrode angeordnet ist, wobei der Schutzfilm mindestens ein erstes Polymer umfasst, ausgewählt aus einem Polyvinylalkohol-Pfropfcopolymer, einem vernetzten Polyvinylalkohol-Pfropfcopolymer, einem vernetzten Polyvinylalkoholcopolymer und einem Gemisch davon.

**2.** Lithiummetallbatterie nach Anspruch 1, wobei das Polyvinylalkohol-Pfropfcopolymer ein Pfropfcopolymer eines Polyvinylalkohols und eines olefinischen Monomers ist, vorzugsweise wobei:

das olefinische Monomer mindestens eines umfasst, ausgewählt aus Acrylonitril, Styrol, Vinylacetate, 4-Bromstyrol, tert-Butylstyrol, Divinylbenzol, Methyl (Meth)acrylat, Ethyl (Meth)acrylat, Propyl (Meth)acrylat, n-Butyl (Meth)acrylat, Isobutyl (Meth)acrylat, Ethylen, Propylen, Isobutylen, N-Isopropylacrylamid, Vinylidenfluoderid, 4-Methylpentan-1, Maleinanhydrid, Cyclohexyl (Meth)acrylat, Cyclohexylvinylether, tert-Butylvinylether, Vinylcyclohexan, Butenylenterephthalate, Ethenylenterephthalat und Vinylpyridin; und/oder
eine Menge des olefinischen Monomers in einem Bereich von 50 Mol bis 200 Mol beruhend auf 100 Mol des Polyvinylalkohols ist.

**3.** Lithiummetallbatterie nach Anspruch 1 oder 2, wobei:

der Schutzfilm ein Elastizitätsmodul von 10,0 Megapascal oder größer bei 25 °C aufweist;
der Schutzfilm Elongation von 50 % oder größer bei 25 °C aufweist; und/oder der Schutzfilm eine Abschälfestigkeit von 5,0 Megapascal oder größer bei 25 °C aufweist.

**4.** Lithiummetallbatterie nach einem der Ansprüche 1-3, wobei:

das erste Polymer ein durchschnittliches Molekulargewicht von 30.000 Dalton oder größer aufweist;
das erste Polymer einen Saponifizierungsgrad von 85 Mol-Prozent aufweist; und/oder das erste Polymer eine Glasübergangstemperatur in einem Bereich von 40 °C bis 80 °C aufweist.

**5.** Lithiummetallbatterie nach einem der Ansprüche 1-4, wobei der Schutzfilm ferner mindestens ein zweites Polymer, ausgewählt aus einem (Meth)acryl-Polymer und Polyacrylonitril, als ein Gemisch mit dem mindestens einen ersten Polymer oder Gemisch davon umfasst, vorzugsweise wobei:

das zweite Polymer mindestens eines umfasst, ausgewählt aus Polymethylmethacrylat, Polymethylacrylat, Polyethylmethacrylat, Polyethylacrylat, Polypropylmethacrylat, Polypropylacrylat, Polybutylacrylat, Polybutylmethacrylat, Polypentylmethacrylat, Polypentylacrylat, Polycyclohexylmethacrylat, Polycyclohexylacrylat, Polyhexylmethacrylat, Polyhexylacrylat, Polyglycidylacrylat, Polyglycidylmethacrylat und Polyacrylonitril; und/oder
eine Menge des zweiten Polymers in einem Bereich von 10 Gewichtsanteilen bis 50 Gewichtsanteilen beruhend auf 100 Gewichtsanteilen des ersten Polymers ist.

**6.** Lithiummetallbatterie nach einem der Ansprüche 1-5, ferner umfassend ein Lithiumsalz, vorzugsweise wobei:

eine Menge des Lithiumsalzes in einem Bereich von 30 Gewichtsanteilen bis 200 Gewichtsanteilen beruhend auf 100 Gewichtsanteilen des ersten Polymers ist; und/oder
das Lithiumsalz mindestens eines umfasst, ausgewählt aus LiSCN, $LiN(CN)_2$, $LiClO_4$, $LiBF_4$, $LiAsF_6$, $LiPF_6$, $LiCF_3SO_3$, $Li(FSO_2)_2N$, $Li(CF_3SO_2)_3C$, $LiN(SO_2C_2F_5)_2$, $LiN(SO_2CF_3)_2$, $LiSbF_6$, $LiPF_3(CF_2CF_3)_3$, $LiPF_3(CF_3)_3$, $LiB(C_2O_4)_2$, LiCl und LiI.

**7.** Lithiummetallbatterie nach einem der Ansprüche 1-6, wobei der Schutzfilm ferner Folgendes umfasst:

ein Lithiumsalz, und wobei der Schutzfilm eine Elongation von 50 % oder größer bei 25 °C aufweist;
mindestens eines ausgewählt aus einer Vielzahl von anorganischen Partikeln und ein Oligomer, vorzugsweise wobei das Oligomer mindestens eines ausgewählt aus Polyethylenglykoldimethylether und Polyethylenglykoldiethylether umfasst, und/oder die Vielzahl von anorganischen Partikeln mindestens eines ausgewählt aus $SiO_2$, $TiO_2$, ZnO, $Al_2O_3$, $BaTiO_3$, Graphenoxid, Grafitoxid, Kohlenstoffnanoröhrchen, $Fe_2O_3$, CuO, käfigstruk-

turiertes Silsesquioxan und ein metallorganisches Rahmenwerk umfasst; und/oder
ein Elektrolyt, vorzugsweise wobei der Elektrolyt mindestens einen ausgewählt aus einem flüssigen Elektrolyt, einem Polymer-Elektrolyt, einem Gel-Elektrolyt, einer ionischen Flüssigkeit und einer polymeren ionischen Flüssigkeit umfasst.

**8.** Lithiummetallbatterie nach Anspruch 7, wobei die ionische Flüssigkeit oder die polymere ionische Flüssigkeit Folgendes umfasst:

i) mindestens ein Kation, ausgewählt aus einem Ammoniumkation, einem Pyrrolidiniumkation, einem Pyridiniumkation, einem Pyrimidiniumkation, einem Imidazoliumkation, einem Piperidiniumkation, einem Pyrazoliumkation, einem Oxazoliumkation, einem Pyridaziniumkation, einem Phosphoniumkation, einem Sulfoniumkation und einem Triazoliumkation; und
ii) mindestens ein Anion ausgewählt aus $BF_4^-$, $PF_6^-$, $AsF_6^-$, $SbF_6^-$, $AlCl_4^-$, $HSC_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $CF_3SO_3^-$, $(C_2F_5SO_2)_2N^-$, $(C_2F_5SO_2)(CF_3SO_2)N^-$, $(Cf_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N$- und $(CF_3SO_2)_2N^-$.

**9.** Lithiummetallbatterie nach einem der Ansprüche 1-8, wobei der Schutzfilm eine Stärke von 1 Mikrometer bis 20 Mikrometer aufweist.

**10.** Lithiummetallbatterie nach einem der Ansprüche 1-9, wobei der Schutzfilm ein Pfropfcopolymer aus Polyvinylalkohol und Acrylonitril, oder ein Pfropfcopolymer aus Polyvinylalkohol und Methylmethacrylat umfasst.

**11.** Lithiummetallbatterie nach einem der Ansprüche 1-10, wobei:

der Elektrolyt ein flüssiger Elektrolyt ist, vorzugsweise wobei der flüssige Elektrolyt mindestens eines ausgewählt aus einem organischen Lösungsmittel, einer ionischen Flüssigkeit und einem Lithiumsalz umfasst; oder
der Elektrolyt mindestens eines ausgewählt aus einem Feststoffelektrolyt, einem Gel-Elektrolyt und einer polymeren ionischen Flüssigkeit umfasst.

**12.** Lithiummetallbatterie nach Anspruch 11, wobei der flüssige Elektrolyt mindestens eines umfasst, ausgewählt aus Ethylencarbonat, Propylencarbonat, Dimethylcarbonat, Diethylcarbonat, Ethylmethylcarbonat, Fluorethylencarbonat, γ-Butyrolacton, Dimethoxyethan, Diepoxyethan, Diethylenglykoldimethylether, Dipropylenglykoldimethylether, Trimethylenglykoldimethylether, Triethylenglykoldimethylether, Tetraethylenglykoldimethylether, Polyethylenglykoldimethylether, Succinonitril, Sulfolan, Dimethylsulfon, Ethylmethylsulfon, Diethylsulfon, Adiponitril, Tetrahydrofuran, N-Methylpyrrolidon, Acetonitril, Benzonitril, 2-Methyltetrahydrofuran, Dioxolan, 4-Methyldioxolan, N,N-Dimethylfodermamid, N,N-Dimethylacetamid, Dimethylsulfoxid, Dioxan, 1,2-Dimethoxyethan, Dichlorethan, Chlorbenzol, Nitrobenzol, Diethyleneglykol, Dimethylether, und 1,1,2,2-Tetrafluorethyl 2,2,3,3-Tetrafluorpropylether.

**13.** Lithiummetallbatterie nach einem der Ansprüche 1-12, die eine Struktur aufweist, in der: i) eine Lithiummetallelektrode, ii) ein Schutzfilm umfassend ein Polyvinylalkohol-Pfropfcopolymer, iii) ein Trennelement und ein flüssiger Elektrolyt und iv) eine positive Elektrode aufeinanderfolgend laminiert sind.

## Revendications

**1.** Batterie au lithium métal comprenant :

une électrode positive,
une électrode négative,
un électrolyte intercalé entre l'électrode positive et l'électrode négative, et
un séparateur ;
ladite électrode négative comprenant :

une électrode de lithium métal ; et
un film de protection disposé sur au moins une partie de l'électrode de lithium métal,
ledit film de protection comprenant au moins un premier polymère choisi parmi un copolymère greffé d'alcool polyvinylique, un copolymère greffe d'alcool polyvinylique réticulé, un copolymère d'alcool polyvinylique

réticulé, et un mélange de ceux-ci.

2. Batterie au lithium métal selon la revendication 1, ledit copolymère greffé d'alcool polyvinylique étant un copolymère greffé d'un alcool polyvinylique et d'un monomère oléfinique, de préférence :

ledit monomère oléfinique comprenant au moins un composé choisi parmi l'acrylonitrile, le styrène, l'acétate de vinyle, le 4-bromostyrène, le tert-butylstyrène, le divinylbenzène, le (méth)acrylate de méthyle, le (méth)acrylate d'éthyle, le (méth)acrylate de propyle, le (méth)acrylate de n-butyle, le (méth)acrylate d'isobutyle, l'éthylène, le propylène, l'isobutylène, l'acrylamide de N-isopropyle, le fluorure de vinylidène, le 4-méthylpentane-1, l'anhydride maléique, le (méth)acrylate de cyclohexyle, le cyclohexylvinyléther, le tert-butylvinyléther, le vinylcyclohexane, les buténylène téréphtalates, l'éthénylène téréphtalate, et la vinylpyridine ; et/ou
la quantité de monomère oléfinique se trouvant dans la plage de 50 moles à 200 moles sur la base de 100 moles d'alcool polyvinylique.

3. Batterie au lithium métal selon la revendication 1 ou 2 :

ledit film de protection présentant un module de traction supérieur ou égal à 10,0 mégapascals à 25°C ;
ledit film de protection présentant une élongation supérieure ou égale à 50 % à 25°C ; et/ou
ledit film de protection présentant une résistance au pelage supérieure ou égale à 5,0 mégapascals à 25°C.

4. Batterie au lithium métal selon l'une quelconque des revendications 1 à 3 :

ledit premier polymère ayant un pois moléculaire moyen en poids supérieur ou égal à 30000 Daltons ;
ledit premier polymère présentant un degré de saponification de 85 % en moles ; et/ou
ledit premier polymère présentant une température de transition vitreuse comprise dans la plage de 40°C à 80°C.

5. Batterie au lithium métal selon l'une quelconque des revendications 1 à 4, ledit film de protection comprenant en outre au moins un second polymère choisi parmi un polymère (méth)acrylique et le polyacrylonitrile, sous forme d'un mélange avec ledit au moins un premier polymère ou mélange de celui-ci, de préférence :

ledit second polymère comprenant au moins un composé choisi parmi le polyméthacrylate de méthyle, le polyacrylate de méthyle, le polyméthacrylate d'éthyle, le polyacrylate d'éthyle, le polyméthacrylate de propyle, le polyacrylate de propyle, le polyacrylate de butyle, le polyméthacrylate de butyle, le polyméthacrylate de pentyle, le polyacrylate de pentyle, le polyméthacrylate de cyclohexyle, le polyacrylate de cyclohexyle, le polyméthacrylate d'hexyle, le polyacrylate d'hexyle, le polyacrylate de glycidyle, le polyméthacrylate de glycidyle, et le polyacrylonitrile ; et/ou
la quantité du second polymère se trouvant dans la plage de 10 parties en poids à 50 parties en poids sur la base de 100 parties en poids du premier polymère.

6. Batterie au lithium métal selon l'une quelconque des revendications 1 à 5, comprenant en outre un sel de lithium, de préférence :

la quantité de sel de lithium se trouvant dans la plage de 30 parties en poids à 200 parties en poids sur la base de 100 parties en poids du premier polymère ; et/ou
le sel de lithium comprenant au moins un composé choisi parmi LiSCN, $LiN(CN)_2$, $LiClO_4$, $LiBF_4$, $LiAsF_6$, $LiPF_6$, $LiCF_3SO_3$, $Li(FSO_2)_2N$, $Li(CF_3SO_2)_3C$, $LiN(SO_2C_2F_5)_2$, $LiN(SO_2CF_3)_2$, $LiSbF_6$, $LiPF_3(CF_2CF_3)_3$, $LiPF_3(CF_3)_3$, $LiB(C_2O_4)_2$, LiCl et LiI.

7. Batterie au lithium métal selon l'une quelconque des revendications 1 à 6, ledit film de protection comprenant en outre :

un sel de lithium, et
ledit film de protection présentant une élongation supérieure ou égale à 50 % à 25°C ;
au moins un composé choisi parmi une pluralité de particules inorganiques et un oligomère, de préférence ledit oligomère comprenant au moins un composé choisi parmi le polyéthylène glycol diméthyléther et polyéthylène glycol diéthyléther et/ou la pluralité de particules inorganiques comprenant au moins un composé choisi parmi $SiO_2$, $TiO_2$, ZnO, $Al_2O_3$, $BaTiO_3$, l'oxyde de graphène, l'oxyde de graphite, un nanotube de carbone, $Fe_2O_3$, CuO, un silsesquioxane à structure en forme de cage et une structure organométallique ; et/ou

un électrolyte, de préférence ledit électrolyte comprenant au moins un composé choisi parmi un électrolyte liquide, un électrolyte polymère, un électrolyte en gel, un liquide ionique et un liquide ionique polymère.

**8.** Batterie au lithium métal selon la revendication 7, ledit liquide ionique ou ledit liquide ionique polymère comprenant :

i) au moins un cation choisi parmi un cation ammonium, un cation pyrrolidinium, un cation pyridinium, un cation pyrimidinium, un cation imidazolium, un cation pipéridinium, un cation pyrazolium, un cation oxazolium, un cation pyridazinium, un cation phosphonium, un cation sulfonium, et un cation triazolium ; et
ii) au moins un anion choisi parmi $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N^-$ et $(CF_3SO_2)_2N^-$.

**9.** Batterie au lithium métal selon l'une quelconque des revendications 1 à 8, ledit film de protection ayant une épaisseur de 1 micromètre à 20 micromètres.

**10.** Batterie au lithium métal selon l'une quelconque des revendications 1 à 9, ledit film de protection comprenant un copolymère greffé d'alcool polyvinylique et d'acrylonitrile, ou un copolymère greffé d'alcool polyvinylique et de méthacrylate de méthyle.

**11.** Batterie au lithium métal selon l'une quelconque des revendications 1 à 10 :

ledit électrolyte étant un électrolyte liquide, de préférence ledit électrolyte liquide comprenant au moins un composé choisi parmi un solvant organique, un liquide ionique et un sel de lithium ; ou
ledit électrolyte comprenant au moins un composé choisi parmi un électrolyte solide, un électrolyte en gel et un liquide ionique polymère.

**12.** Batterie au lithium métal selon la revendication 11, ledit électrolyte liquide comprenant au moins un composé choisi parmi le carbonate d'éthylène, le carbonate de propylène, le carbonate de diméthyle, le carbonate de diéthyle, le carbonate d'éthylméthyle, le carbonate de fluoroéthylène, la γ-butyrolactone, le diméthoxyéthane, le diépoxyéthane, le diéthylène glycol diméthyléther, le dipropylène glycol diméthyléther, le triméthylène glycol diméthyléther, le triéthylène glycol diméthyléther, le tétraéthylène glycol diméthyléther, le polyéthylène glycol diméthyléther, le succinonitrile, le sulfolane, la diméthylsulfone, l'éthylméthylsulfone, la diéthylsulfone, l'adiponitrile, le tétrahydrofurane, la N-méthylpyrrolidone, l'acétonitrile, la benzonitrile, le 2-méthyltétrahydrofurane, le dioxolane, le 4-méthyldioxolane, le N,N-diméthylformamide, le N,N-diméthylacétamide, le diméthylsulfoxyde, le dioxane, le 1,2-diméthoxyéthane, le dichloroéthane, le chlorobenzène, le nitrobenzène, le diéthylène glycol, le diméthyléther, et le 1,1,2,2-tétrafluoroéthyl-2,2,3,3-tétrafluoropropyléther.

**13.** Batterie au lithium métal selon l'une quelconque des revendications 1 à 12, ayant une structure dans laquelle : i) une électrode de lithium métal, ii) un film de protection comprenant un copolymère greffé d'alcool polyvinylique, iii) un séparateur et un électrolyte liquide, et iv) une électrode positive sont stratifiés de manière séquentielle.

FIG. 1

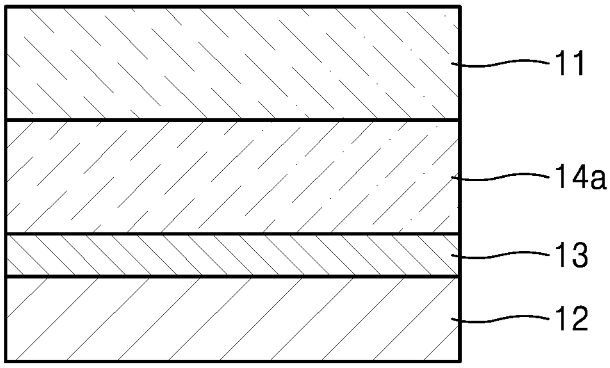


FIG. 2

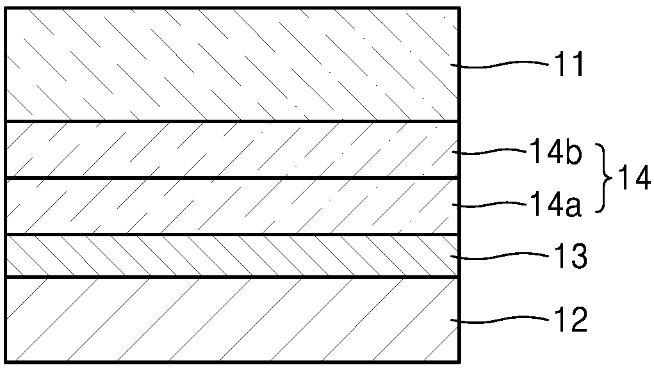

FIG. 3

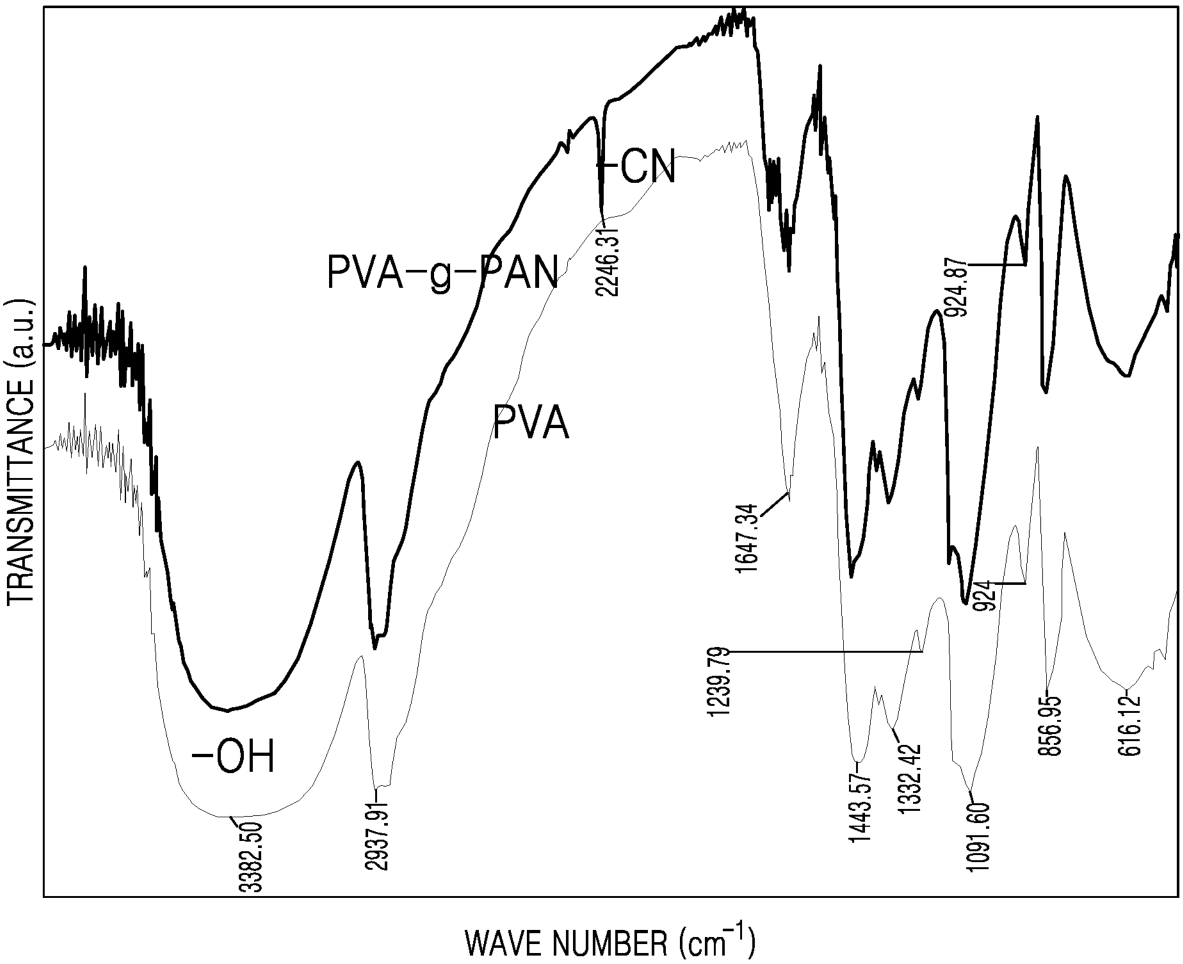
TRANSMITTANCE (a.u.)
WAVE NUMBER (cm-1)
PVA-g-PAN
PVA
-CN
-OH
2246.31
924.87
1647.34
924
1239.79
3382.50
2937.91
1443.57
1332.42
1091.60
856.95
616.12

# FIG. 4

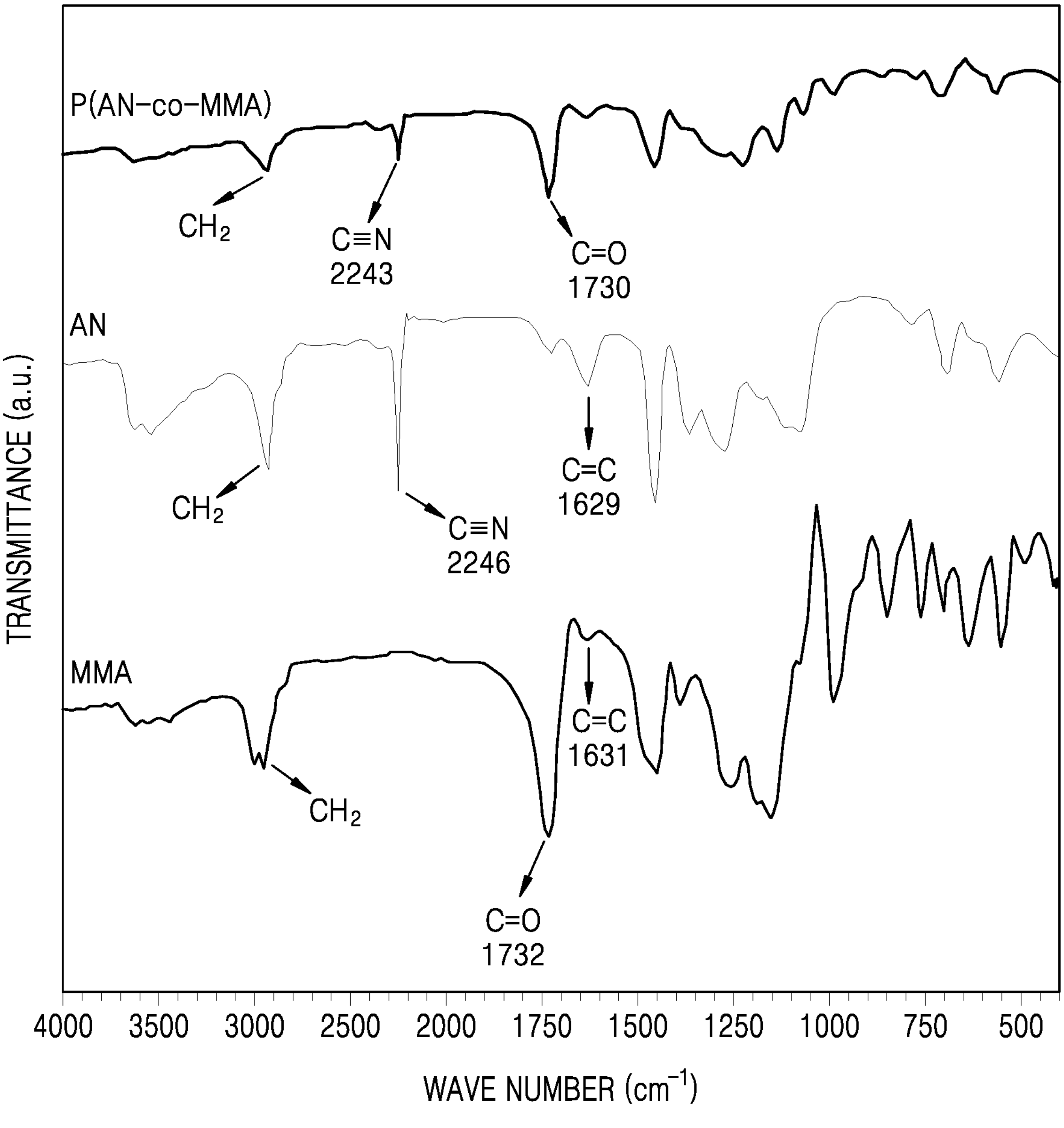
P(AN-co-MMA)
CH2
C≡N
2243
C=O
1730
AN
CH2
C≡N
2246
C=C
1629
MMA
CH2
C=C
1631
C=O
1732
TRANSMITTANCE (a.u.)
4000
3500
3000
2500
2000
1750
1500
1250
1000
750
500
WAVE NUMBER (cm-1)

FIG. 5

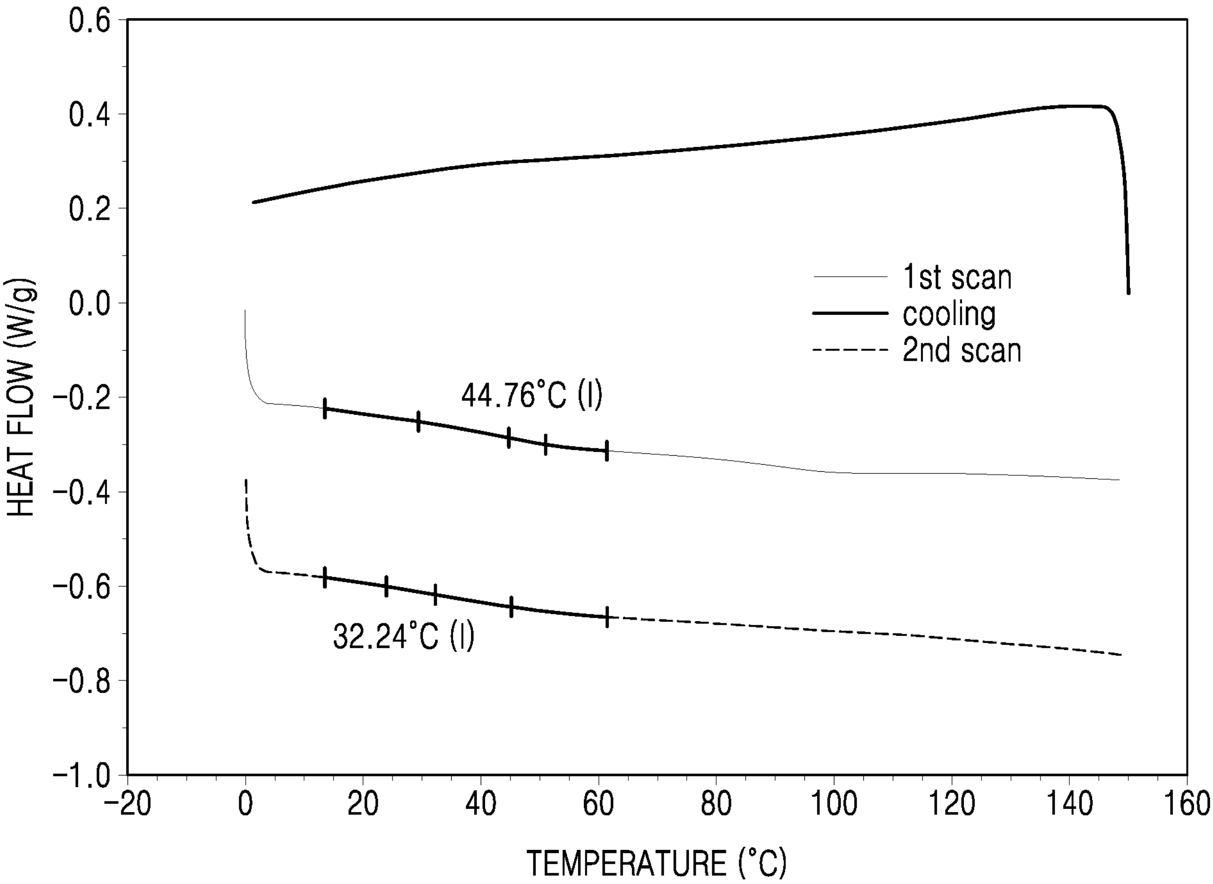
0.6
0.4
0.2
0.0
−0.2
−0.4
−0.6
−0.8
−1.0
HEAT FLOW (W/g)
−20
0
20
40
60
80
100
120
140
160
TEMPERATURE (°C)
1st scan
cooling
2nd scan
44.76°C (I)
32.24°C (I)

FIG. 6

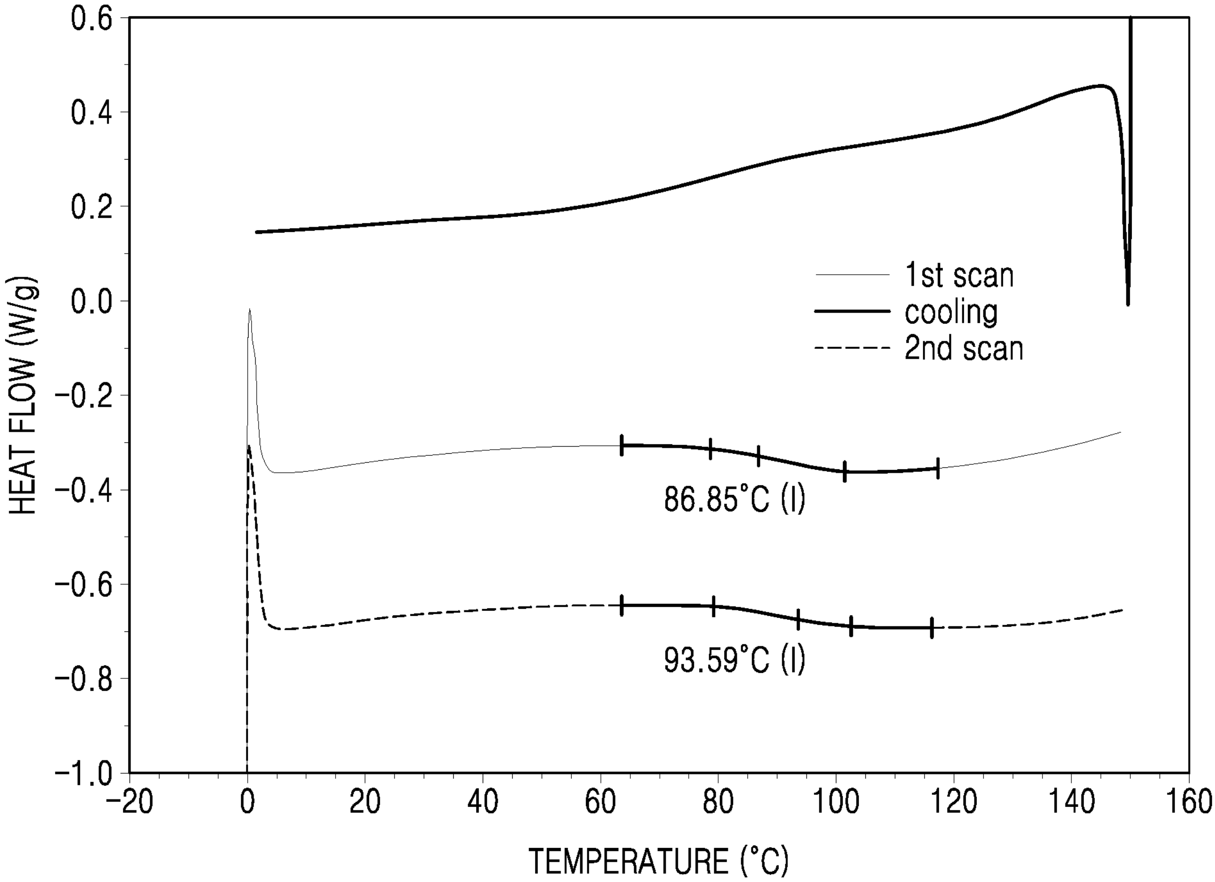
0.6
0.4
0.2
0.0
−0.2
−0.4
−0.6
−0.8
−1.0
HEAT FLOW (W/g)
−20
0
20
40
60
80
100
120
140
160
TEMPERATURE (°C)
1st scan
cooling
2nd scan
86.85°C (I)
93.59°C (I)

FIG. 7

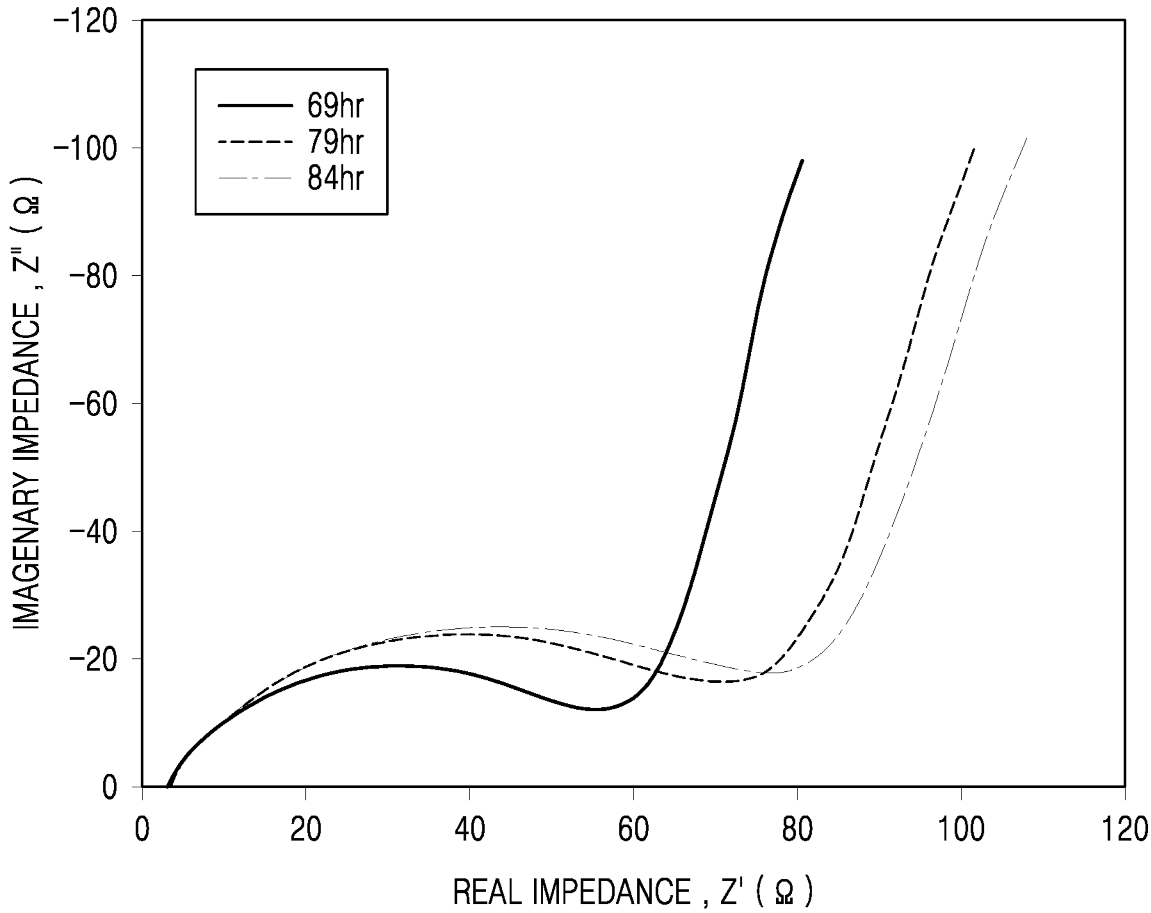
69hr
79hr
84hr
IMAGENARY IMPEDANCE , Z" ( Ω )
REAL IMPEDANCE , Z' ( Ω )
-120
-100
-80
-60
-40
-20
0
0
20
40
60
80
100
120

FIG. 8

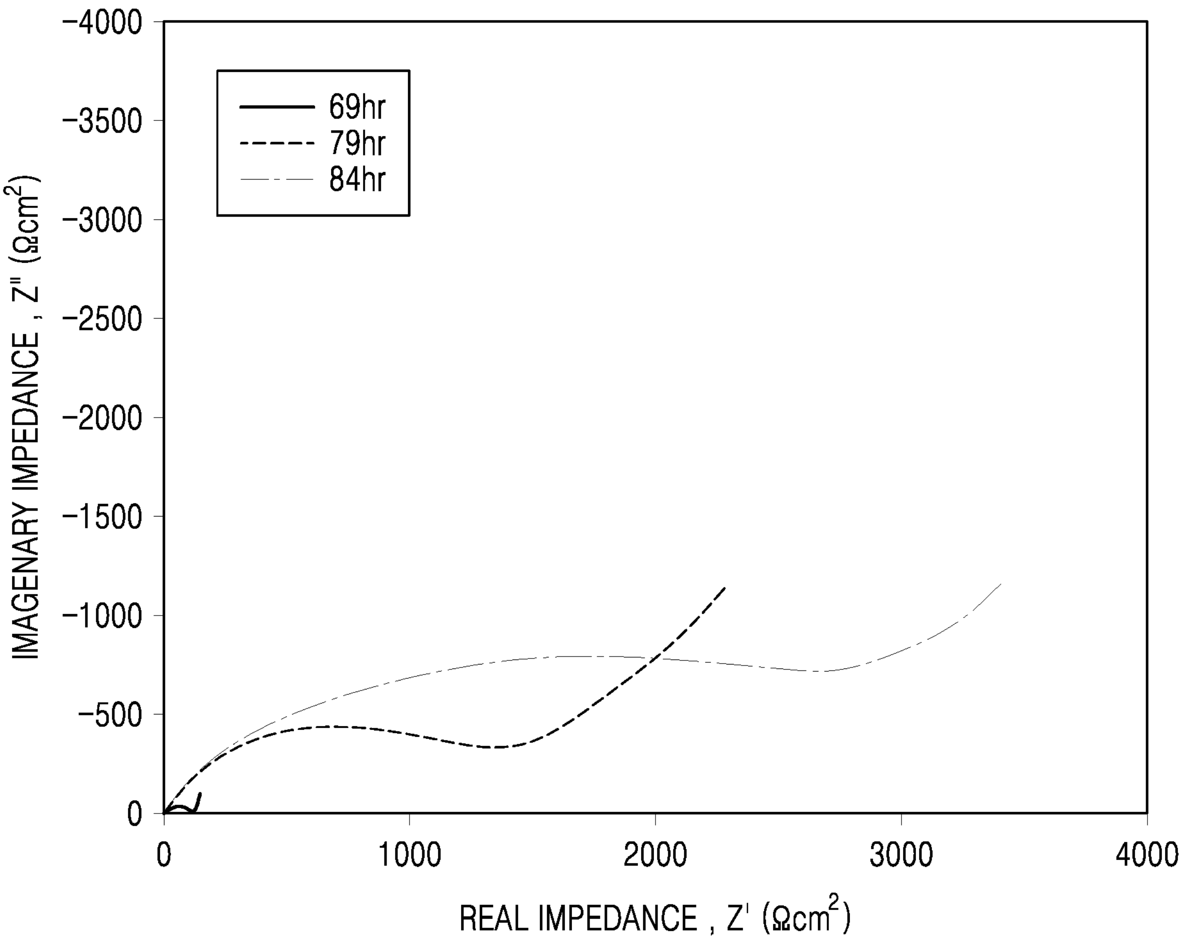
69hr
79hr
84hr
IMAGENARY IMPEDANCE , Z" (Ωcm2)
-4000
-3500
-3000
-2500
-2000
-1500
-1000
-500
0
0
1000
2000
3000
4000
REAL IMPEDANCE , Z' (Ωcm2)

FIG. 9

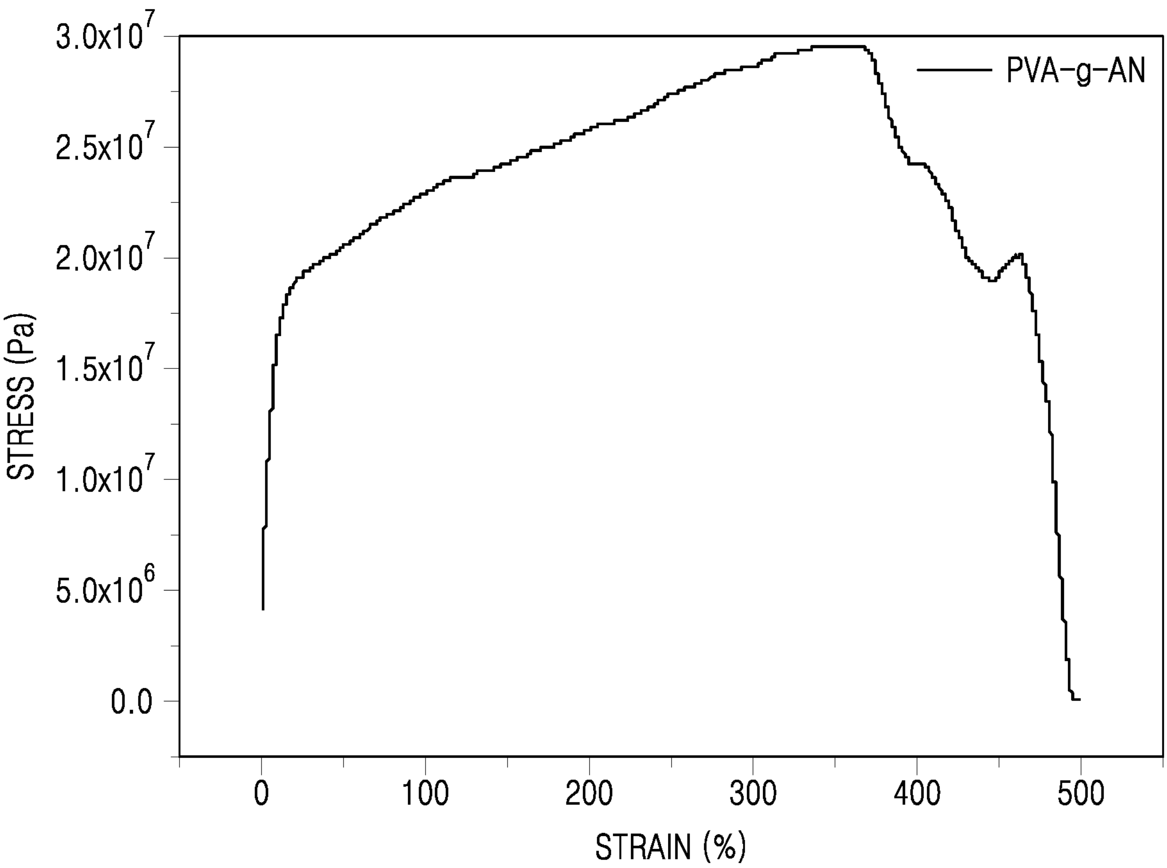
3.0x10^7
2.5x10^7
2.0x10^7
1.5x10^7
1.0x10^7
5.0x10^6
0.0
STRESS (Pa)
0
100
200
300
400
500
STRAIN (%)
PVA-g-AN

FIG. 10

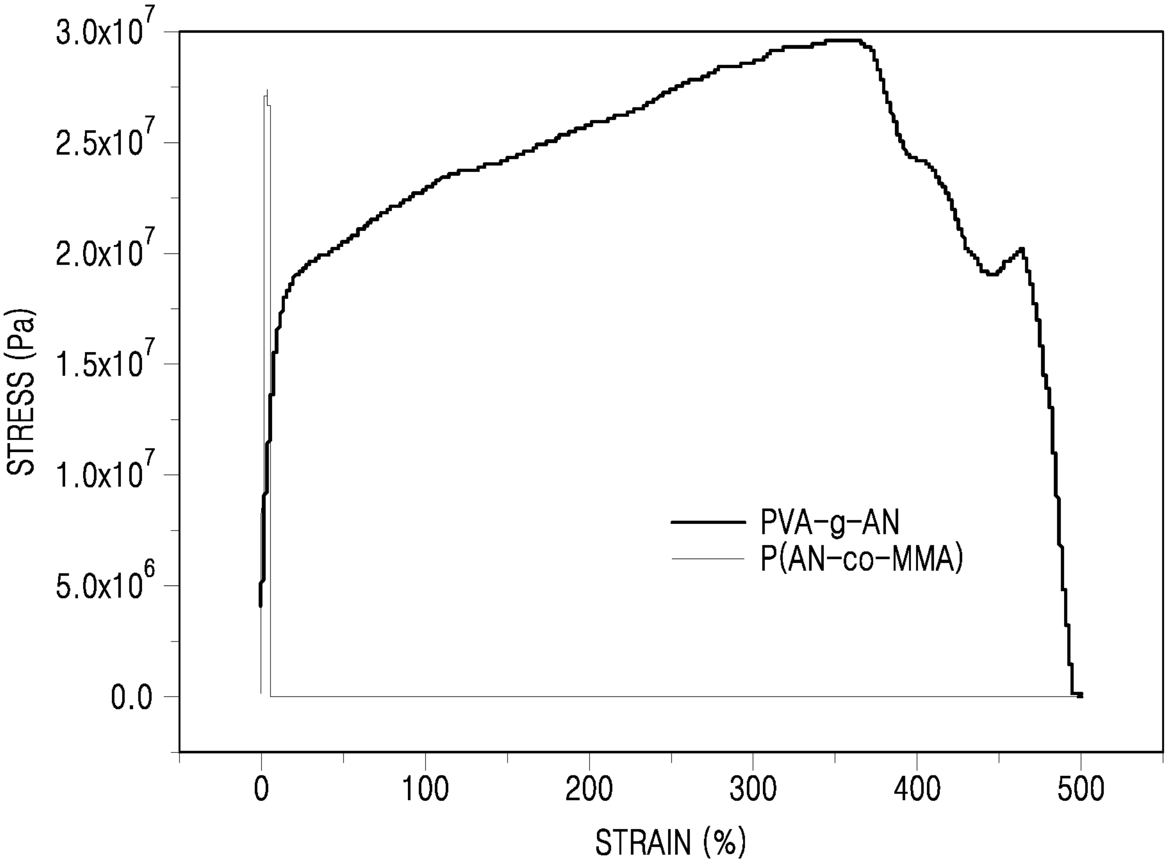
3.0x10^7
2.5x10^7
2.0x10^7
1.5x10^7
1.0x10^7
5.0x10^6
0.0
STRESS (Pa)
0
100
200
300
400
500
STRAIN (%)
PVA-g-AN
P(AN-co-MMA)

FIG. 11

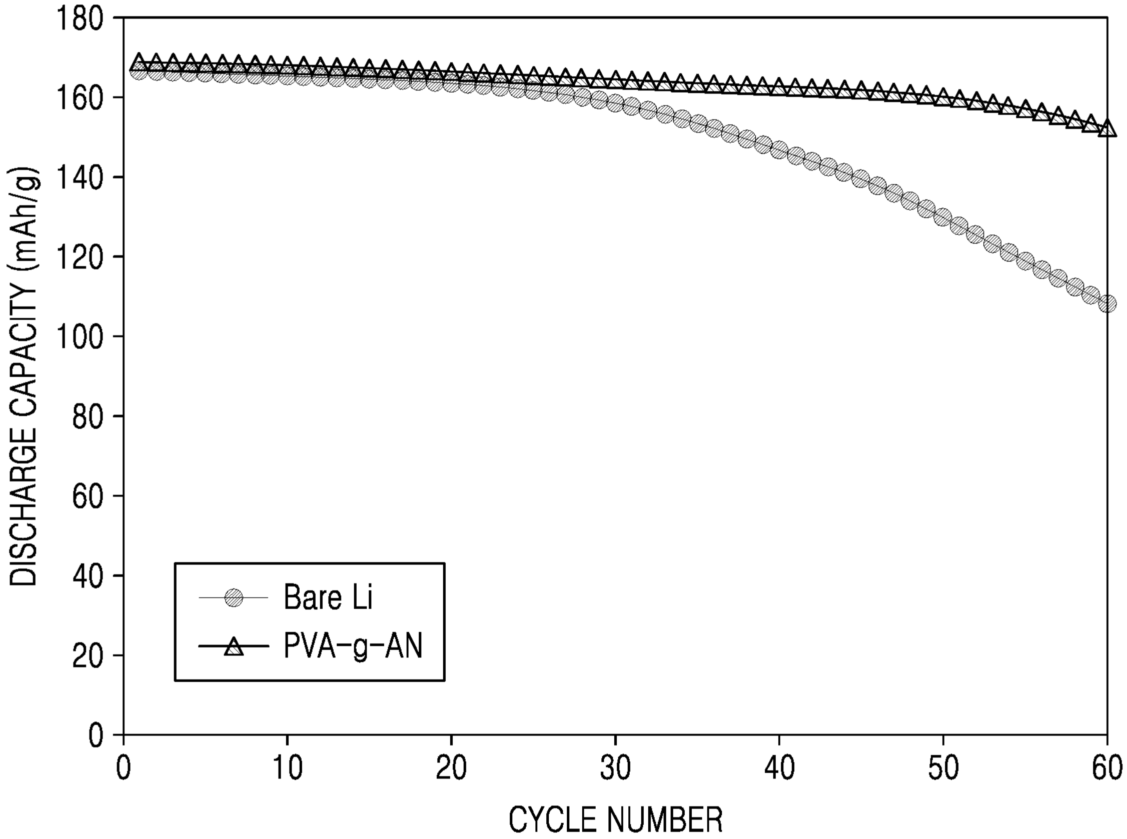
DISCHARGE CAPACITY (mAh/g)
180
160
140
120
100
80
60
40
20
0
0
10
20
30
40
50
60
CYCLE NUMBER
Bare Li
PVA-g-AN

FIG. 12

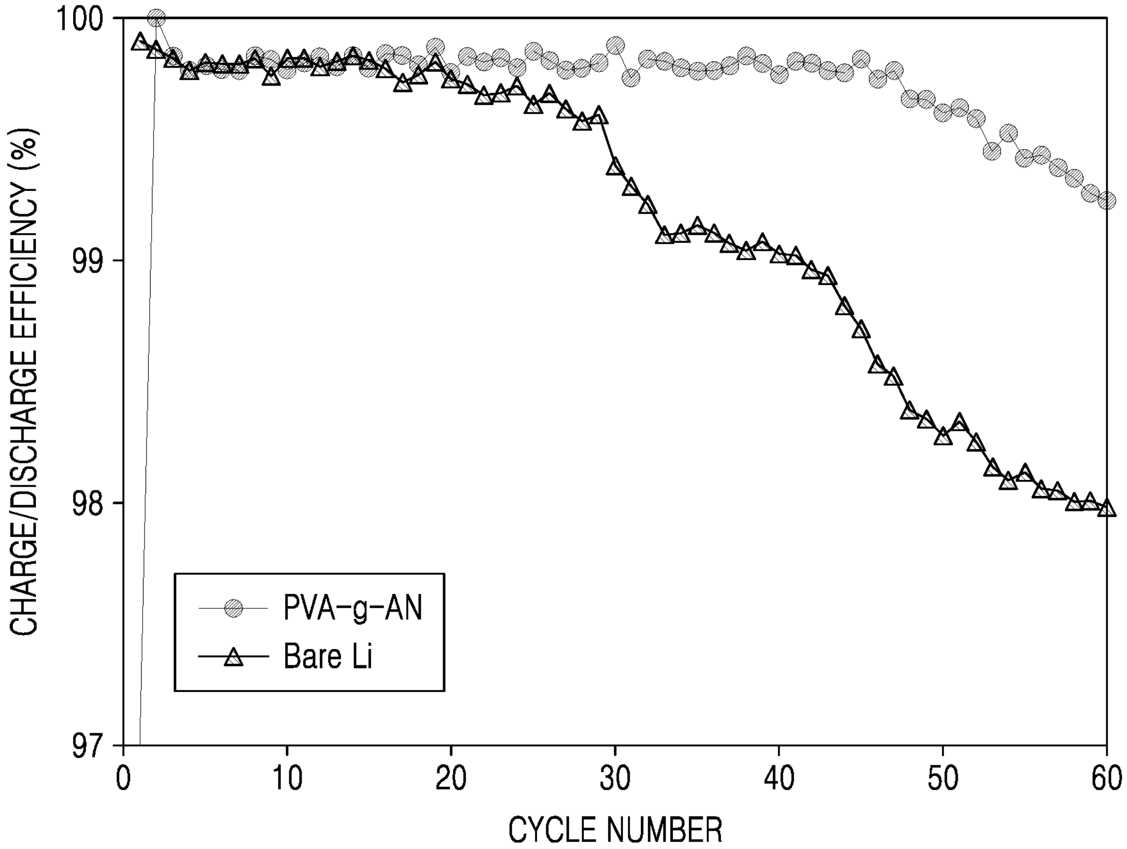
100
99
98
97
CHARGE/DISCHARGE EFFICIENCY (%)
0
10
20
30
40
50
60
CYCLE NUMBER
PVA-g-AN
Bare Li

FIG. 13

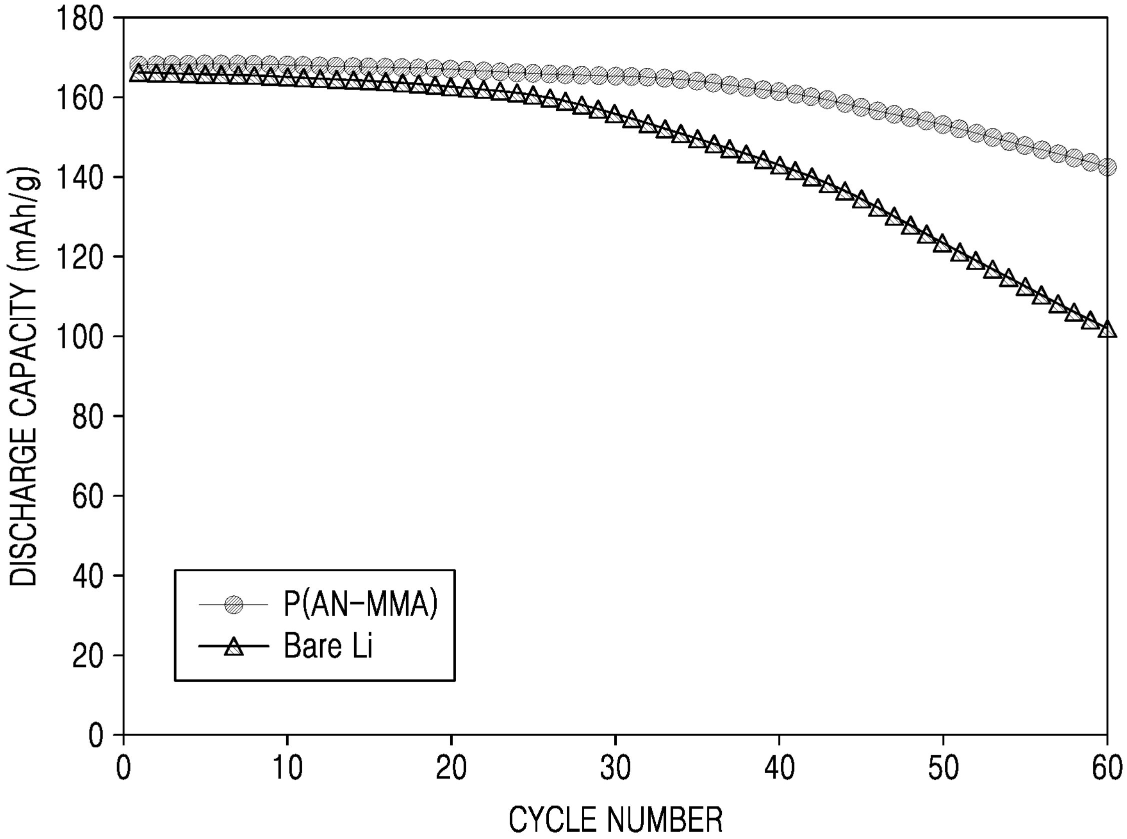
180
160
140
120
100
80
60
40
20
0
DISCHARGE CAPACITY (mAh/g)
0
10
20
30
40
50
60
CYCLE NUMBER
P(AN-MMA)
Bare Li

FIG. 14

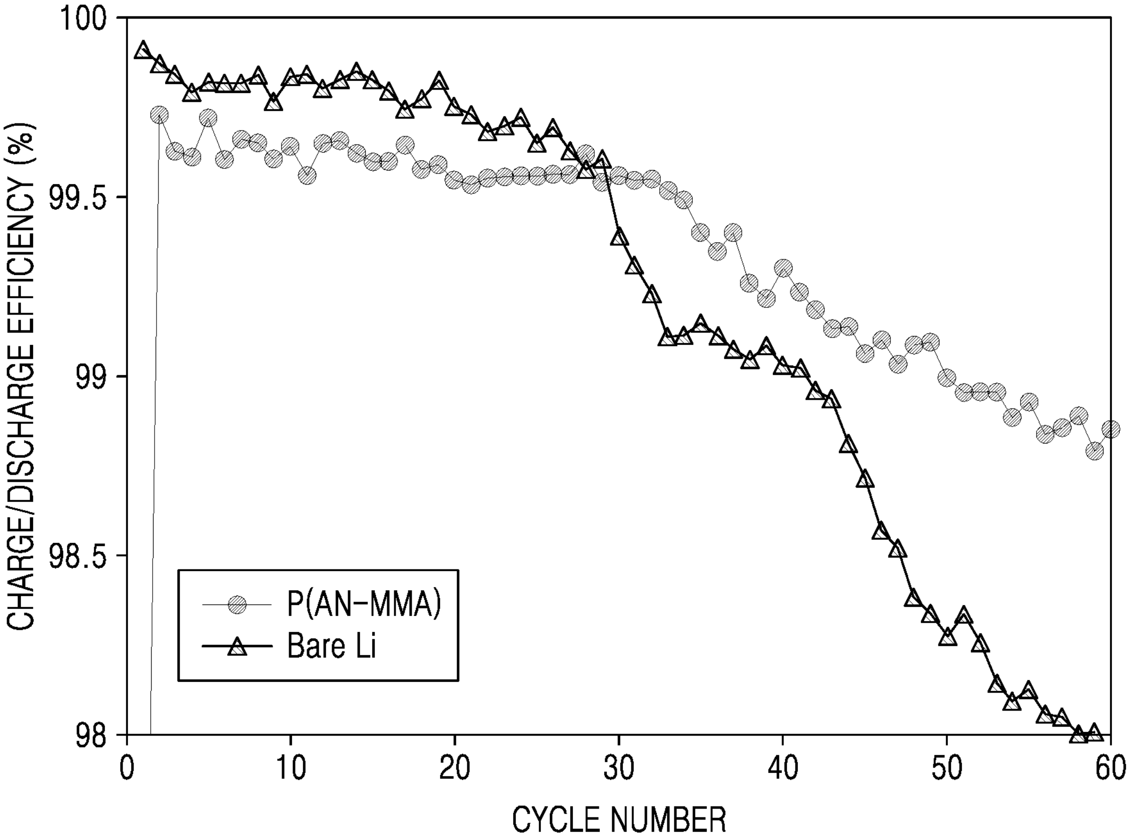
100
99.5
99
98.5
98
0
10
20
30
40
50
60
CHARGE/DISCHARGE EFFICIENCY (%)
CYCLE NUMBER
P(AN-MMA)
Bare Li

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005095504 A
- US 2015155541 A